# EUROPÄISCHE PATENTSCHRIFT

(11) **EP 2 379 575 B1**
(45) Veröffentlichungstag und Bekanntmachung des Hinweises auf die Patenterteilung: **12.04.2017**
(21) Anmeldenummer: 09740265.5
(22) Anmeldetag: 06.10.2009
(51) Int. Cl.: C07F 9/50

(54) **HYDROPHOSPHORYLIERUNG VON PHOSPHONIGSÄUREDERIVATEN FÜR FLAMMSCHUTZMITTEL**
HYDROPHOSPHORYLATION OF PHOSPHONIC ACID DERIVATIVES TO YIELD FLAME RETARDANTS
HYDROPHOSPHORYLATION DES DÉRIVÉS ACIDES PHOSPHONIQUES POUR RAPPORTER DES RETARDEMENTS DE FLAMME

(30) Priorität: 19.12.2008 DE 102008064012
(43) Veröffentlichungstag der Anmeldung: 26.10.2011
(73) Patentinhaber: Clariant International Ltd, 4132 Muttenz (CH)
(72) Erfinder: HILL, Michael, 22043 Hamburg (DE); BAUER, Harald, 50170 Kerpen (DE); KRAUSE, Werner, 50354 Hürth (DE); SICKEN, Martin, 51149 Köln (DE)
(74) Vertreter: Mikulecky, Klaus
(86) Internationale Anmeldenummer: PCT/EP2009/007145
(87) Internationale Veröffentlichungsnummer: WO 2010/069421

(56) Entgegenhaltungen:
- EP-A1- 1 832 594
- EP-A2- 0 969 008
- JP-A- 5 230 085
- RUSSIAN JOURNAL OF GENERAL CHEMISTRY (TRANSLATION OF ZHURNAL OBSHCHEI KHIMII) , 74(6), 864-872 CODEN: RJGCEK; ISSN: 1070-3632, 2004, XP002561442
- PUDOVIK A N ET AL: "NEW METHOD OF SYNTHESIS OF ESTERS OF PHOSPHONIC AND THIOPHOSPHONIC ACIDS. XVI. SYNTHESIS OF ESTERS OF MONO- AND DIPHOSPHONO- AND THIOPHOSPHONOCARBOXYLIC ACIDS", BULLETIN OF THE ACADEMY OF SCIENCES OF THE USSR, DIVISION OF CHEMICAL SCIENCES, SPRINGER NEW YORK LLC, US, 1 January 1954 (1954-01-01), pages 543-550, XP009084868, ISSN: 0568-5230, DOI: 10.1007/BF01172697
- PUDOVIK A N ET AL: "NEW METHOD OF SYNTHESIS OF ESTERS OF PHOSPHONIC AND THIOPHOSPHONIC ACIDS. XVI. SYNTHESIS OF ESTERS OF MONO- AND DIPHOSPHONO- AND THIOPHOSPHONOCARBOXYLIC ACIDS", 19540101, 1 January 1954 (1954-01-01), pages 636-645, XP009084884, ISSN: 0002-3353
- BRAVO-ALTAMIRANO K ET AL: "A novel approach to phosphonic acids from hypophosphorous acid", TETRAHEDRON LETTERS, PERGAMON, GB, vol. 48, no. 33, 13 August 2007 (2007-08-13), pages 5755-5759, XP025970421, ISSN: 0040-4039, DOI: 10.1016/J.TETLET.2007.06.090 [retrieved on 2007-07-19]

## Beschreibung

Die Erfindung betrifft ausschliesslich halogenfreie Verfahren zur Herstellung von Addukten aus Alkylphosphonigsäurederivaten und diesterbildenden Olefinen.

Addukte von Alkylphosphonigsäurederivaten und diesterbildenden Olefinen sind nur teilweise bekannt, da sie bisher gar nicht oder nur sehr schwer zugänglich waren. Insbesondere konnten die Produkte bisher nicht halogenfrei hergestellt werden.

Addukte von Oxa-10-phosphaphenanthren mit diesterbildenden Olefinen sind bekannt, ebenso wie Verfahren zu ihrer Herstellung. Der technische Nachteil dieser Addukte ist ihr geringer Phosphorgehalt, der z. B. für den Flammschutz sehr wichtig ist. Dies macht den Einsatz von höheren Konzentrationen an Addukten notwendig und kann die primären Eigenschaften der gegen Flammeneinwirkung zu schützenden Gegenstände, insbesondere von Polymeren, negativ beeinflussen.

Addukte von Methylphosphonigsäure und ihren Estern an Acrylsäurederivate sind bekannt. Jedoch handelt es sich bei den Acrylsäurederivaten nicht um Di(carbonsäure)esterbildner, sondern um Monocarbonsäureesterbildner. Di(carbon-säure)esterbildner können über zwei Carbonsäuregruppen in Polymerketten eingebaut werden, Monocarbonsäureesterbildner nur über die Phosphinsäuregruppe und eine Carbonsäuregruppe. Dicarbonsäureverknüpfte Produkte sind hydrolysebeständiger im Polymer verknüpft als solche, die mit nur einer Carbonsäure verknüpft wurden.

Zur Herstellung oben erwähnter Methylphosphonigsäure wird in einem halogenverarbeitenden Verfahren der Alkylrest am Phosphoratom durch eine chemische Reaktion von gelbem Phosphor mit Halogenalkanen gebunden. Derartige halogenverarbeitende Verfahren haben ernste Nachteile, insbesondere weil im Brandfall die Halogenverbindung giftige und korrosive Gase freisetzt. Halogenverunreinigungen sind grundsätzlich von Nachteil bei der Verwendung der Produkte, insbesondere bei der Verwendung der Produkte als Synthesebausteine in Flammschutzanwendungen.

Bei der Verwendung als Synthesebaustein müssen wegen der korrosiven Wirkung von Halogenidionen (besonders Chloridionen) technisch sehr aufwendige und teure Werkstoffe eingesetzt werden, um die Sicherheit zu gewährleisten.

Bei Flammschutzanwendungen bewirken Halogenidverunreinigungen mehrere Nachteile:
Bei der Verarbeitung (Compoundierung, Spritzguss von flammgeschützten thermoplastischen polymeren Formmassen) zu flammgeschützten Polymer-Formkörpern, -Filmen, -Fäden und -Fasern kann eine erhöhte Korrosion zur Zerstörung von Herstellapparaturen führen.
Durch Korrosion sind die Einsatzmöglichkeiten im Elektronikbereich verhindert bzw. stark eingeschränkt sein.
Beim Einsatz im Brandfall können gesundheits- und umweltschädliche halogenwasserstoffhaltige Brandgase entstehen.

Addukte von Alkylphosphonigsäurederivaten und diesterbildenden Olefinen können also nur dann breite Verwendung finden, wenn es gelingt, sie halogenfrei herzustellen.

Der Erfindung liegt daher die Aufgabe zugrunde, halogenfreie Addukte von Alkylphosphonigsäurederivaten und diesterbildenden Olefinen und insbesondere halogenfreie Verfahren zu deren Herstellung zur Verfügung zu stellen, bei dem sich auf besonders einfache und wirtschaftliche Art und Weise sowie in entsprechend hohen Ausbeuten die gewünschten Addukte herstellen lassen. Die Zielprodukte sind - im Gegensatz zu denen, wie sie nach dem Stand der Technik hergestellt werden können - halogenfrei.

Insbesondere Addukte von Alkylphosphonigsäurederivaten und diesterbildenden Olefinen mit kurzen Seitenketten sollen sich gemäß der vorliegenden Erfindung reproduzierbar und mit guten Ausbeuten herstellen lassen.

Überraschend wurde nun gefunden, dass durch das erfindungsgemäße Verfahren die erfindungsgemäßen Addukte leicht zugänglich sind.

Der technische Vorteil der erfindungsgemäßen Addukte gegenüber Addukten von z. B. Oxa-10-phosphaphenanthren liegt in ihrem höheren Phosphorgehalt. So verhält sich der Phosphorgehalt des erfindungsgemäßen Itaconsäureadduktes von Ethylphosphonigsäure zu dem von Oxa-10-phosphaphenanthrens wie 155 zu 100.

Da es sich bei dem erfindungsgemäßen Verfahren um ein halogenfreies Verfahren handelt sind alle oben geschilderten Nachteile bei den Produkten, die noch halogenhaltige Reste enthalten in den erfindungsgemäßen Produkten ausgeschlossen.

Die Erfindung betrifft daher ein Verfahren zur Herstellung von Addukten von Alkylphosphonigsäurederivaten und diesterbildenden Olefinen, deren Säuren, Ester und Salze oder Mischungen davon.

Gegenstand der Erfindung ist daher ein halogenfreies Verfahren zur Herstellung von Addukten von Alkylphosphonigsäurederivaten der Formel (I)

A-P(=O)(OX)-H (I)

und diesterbildenden Olefinen,
wobei es sich bei A um eine Ethyl-, n-Propyl-, i-Propyl- und/oder n-Butylgruppe handelt und wobei es sich bei X um Wasserstoff, eine Methyl-, Ethyl-, Propyl-Butyl-, Ethylenglycol-, Benzyl-, um Lithium, Natrium, Kalium, Magnesium, Calcium, Barium, Aluminium, Blei, Titan, Eisen, Zink oder Ammonium, handelt und es sich bei den diesterbildenden Olefinen um Maleinsäure, Fumarsäure, Itaconsäure, Maleinsäureanhydrid oder Itaconsäureanhydrid handelt, dadurch gekennzeichnet, dass man
a) eine Phosphinsäurequelle mit Ethylen, 1-Propylen und/oder 1-Buten, in Gegenwart eines Katalysators A zu einem Alkylphosphonigsäurederivat (I) umsetzt, wobei es sich bei der Phosphinsäurequelle um Phosphinsäure, einem Salz der Phosphinsäure, einem Ester der Phosphinsäure oder um Mischungen davon handelt,
b) so entstandenes Alkylphosphonigsäurederivat der Formel (I) mit den vorgenannten diesterbildenden Olefinen in Gegenwart eines Katalysators B zum Addukt umsetzt, wobei es sich bei dem Katalysator A um Übergangsmetalle, Übergangsmetallverbindungen und/oder Katalysatorsysteme handelt, die sich aus einem Übergangsmetall und/oder einer Übergangsmetallverbindung und mindestens einem Liganden zusammensetzen wobei es sich bei den Übergangsmetallen und/oder Übergangsmetallverbindungen um Rhodium, Nickel, Palladium, Ruthenium und/oder Platin handelt und es sich bei dem Katalysator B um Peroxide bildende Verbindungen, Peroxoverbindungen, Azo-Verbindungen, Alkali-, Erdalkalimetalle, -hydride und/oder -alkoholate handelt.

Bevorzugt handelt es sich bei dem Katalysator B um Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azodiisobutyronitril, 2,2'-Azobis(2-amidinopropan)-dihydrochlorid und/oder 2,2'-Azobis(N,N'-dimethylen-isobutyramidin)-dihydrochlorid und/oder um Lithium, Lithiumhydrid, Lithiumaluminiumhydrid, Methyllithium, Butyllithium, t-Butyllithium, Lithiumdiisopropylamid, Natrium, Natriumhydrid, Natriumborhydrid, Natriummethanolat, Natriumethanolat oder Natriumbutylat, Kaliummethanolat, Kaliumethanolat und/oder Kaliumbutylat.

Bevorzugt wird das nach Schritt b) erhaltene Umsetzungsprodukt aus Alkylphosphonigsäurederivaten (I) und diesterbildenden Olefinen (II) in einem Schritt c) mit einem Esterbildner umgesetzt, wobei es sich bei den Esterbildnern um Methanol, Ethanol, Propanol, Butanol, Amylalkohol, Octanol, Ethylenglycol, Polyethylenglycol, 1,2-Propandiol, 1,3-Propandiol, Butandiol, Glycerin, Erythrit, Pentaerythrit, Allylalkohol, 3-Buten-1-ol, 3-Hydroxy-1-buten, 3-Buten-2-ol, Methyl-vinyl-carbinol, 2-Methyl-2-Propen-1-ol, Methallylalkohol, 2-Buten-1-ol, Crotylalkohol, 1-Penten-3-ol, trans-2-Penten-1-ol, cis -2-Penten-l-ol, 3-Penten-2-ol, 4-Penten-1-ol, 4-Penten-2-ol, 1-Hexen-3-ol, cis-2-Hexen-1-ol, trans-2-Hexen-1-ol, cis-3-Hexen-1-ol, trans-3-Hexen-1-ol, 4-Hexen-1-ol, 5-Hexen-1-ol, 5-Hexen-2-ol, 1-Hepten-3-ol, 1-Octen-3-ol, trans-2-Octen-1-ol, Oleylalkohol, Terpenalkohol, Propargylalkohol und/oder 2-Butin-1,4-diol handelt.

Bevorzugt wird das nach Schritt b) erhaltene Umsetzungsprodukt aus Alkylphosphonigsäurederivaten (I) und diesterbildenden Olefinen auchmit einem Katalysator C umgesetzt, wobei das Umsetzungsprodukt verseift wird.

Bevorzugt handelt es sich bei dem Katalysator C um Brönsted-Säuren, Brönsted-Basen, Wasser, Mineralsäuren, Sulfonsäuren, Alkalihydroxide und/oder Erdalkalihydroxide.

Die nach den erfindungsgemäßen Addukten aus Alkylphosphonigsäurederivaten (I) und diesterbildenden Olefinen (II) können als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Therapeutikum oder Additiv in Therapeutika für Menschen und Tiere, als Sequestrierungsmittel, als Mineralöl-Additiv, als Korrosionsschutzmittel, in Wasch- und Reinigungsmittelanwendungen und in Elektronikanwendungen Verwendung finden.

Die nach dem erfindungsgemäßen Verfahren hergestellten Addukte aus Alkylphosphonigsäure-derivaten (I) und diesterbildenden Olefinen (II) können auch als Flammschutzmittel, insbesondere Flammschutzmittel für Klarlacke und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung Verwendung finden.

Nach dem erfindungsgemäßen Verfahren kann
a) eine Phosphinsäurequelle mit nichtdiesterbildenden Olefinen (III) in Gegenwart eines Katalysators A zu einem Alkylphosphonigsäurederivat (I),
b) so entstandenes Alkylphosphonigsäurederivat (I) mit diesterbildenden Olefinen (II), ggf. in Gegenwart eines Katalysators B umgesetzt werden.

In einer anderen Ausgestaltung des erfindungsgemäßen Verfahrens kann
a) eine Phosphinsäurequelle mit nichtdiesterbildenden Olefinen (III) in Gegenwart eines Katalysators A zu einem Alkylphosphonigsäurederivat (I),
b) so entstandenes Alkylphosphonigsäurederivat (I) mit diesterbildenden Olefinen (II), ggf. in Gegenwart eines Katalysators B und
c) dann mit einem Esterbildner umgesetzt werden.

Dieses Verfahren wird später Verfahren 2 genannt.

In einer weiteren Ausgestaltung des erfindungsgemäßen Verfahrens kann
a) eine Phosphinsäurequelle mit nichtdiesterbildenden Olefinen (III) in Gegenwart eines Katalysators A zu einem Alkylphosphonigsäurederivat (I),
b) so entstandenes Alkylphosphonigsäurederivat (I) mit diesterbildenden Olefinen (II), ggf. in Gegenwart eines Katalysators B und
c) dann mit einem Katalysator C umgesetzt werden, wobei das Produkt aus Schritt b) verseift wird.

Dieses Verfahren wird später Verfahren 3 genannt.

Bevorzugt kann am Ende der vorgannten erfindungsgemäßen halogenfreien Verfahren die erhaltenen Addukte von Alkylphosphonigsäurederivaten (I) und diesterbildenden Olefinen (II), deren Säure, Salz oder Ester anschließend mit Metallverbindungen von Mg, Ca, Al, Sb, Sn, Ge, Ti, Fe, Zr, Zn, Ce, Bi, Sr, Mn, Li, Na, K und/oder einer protonierten Stickstoffbase zu den entsprechenden Addukten von Alkylphosphonigsäurederivaten (I) und diesterbildenden Olefinen (II)dieser Metalle und/oder einer Stickstoffverbindung umgesetzt werden.

Bei den Alkylphosphonigsäureestern handelt es sich bevorzugt um Alkyl-, Hydroxyalkyl-, Alkylaryl-, Aryl- und/oder Alkenylester.

Besonders bevorzugt handelt es sich hierbei um die Methyl-, Ethyl-, Propyl-, Butyl-, Amyl-, Octyl-, Ethylhexyl-, Ethylenglycol-, Propylenglycol-, Butylenglycol-, Benzyl-, Phenyl-, Vinyl- und/oder Allylester.

Einsetzbare diesterbildende Olefine (II) sind solche des Typs: 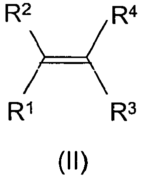 worin R², R⁴ gleich oder verschieden sind und CO₂H CO₂R⁵, R⁶-CO₂H, R⁶-CO₂R⁵; R¹, R³ gleich oder verschieden sind und H, R⁵; R⁵ C₁-C₁₈-Alkyl, C₆-C₁₈-Aryl, C₆-C₁₈-Arylalkyl, C₆-C₁₈-Alkylaryl; R⁶ C₂-C₁₈-Alkylen, C₆-C₁₈-Arylen, C₆-C₁₈-Alkarylen und/oder C₆-C₁₈-Aralkylen bedeuten.

Bevorzugt sind R¹, R⁴ auch gleich oder verschieden und bedeuten CO₂H, CO₂R⁵, R⁶-CO₂H, R⁶-CO₂R⁵; R², R³ sind gleich oder verschieden und bedeuten H, R⁵; R⁵ bedeutet C₁-C₁₈-Alkyl, C₆-C₁₈-Aryl, C₆-C₁₈-Arylalkyl, C₆-C₁₈-Alkylaryl; R⁶ bedeutet C₂-C₁₈-Alkylen, C₆-C₁₈-Arylen, C₆-C₁₈-Alkarylen und/oder C₆-C₁₈-Aralkylen.

Bevorzugt sind R², R⁴ auch gleich oder verschieden und bedeuten -CO-O-CO-, -CO-S-CO-, -CO-NR¹-CO-, -CO-PR¹-CO-; R¹, R³ sind gleich oder verschieden und bedeuten H, R⁵; R⁵ bedeutet C₁-C₁₈-Alkyl, C₆-C₁₈-Aryl, C₆-C₁₈-Arylalkyl, C₆-C₁₈-Alkylaryl.

Bevorzugt sind R¹, R² auch gleich oder verschieden und CO₂H, CN, CO₂R⁵, R⁶-CO₂H, R⁶-CO₂R⁵; R³, R⁴ sind gleich oder verschieden und bedeuten H, R⁵; R⁵ bedeutet
C₁-C₁₈-Alkyl, C₆-C₁₈-Aryl, C₆-C₁₈-Arylalkyl, C₆-C₁₈-Alkylaryl; R⁶ bedeutet C₂-C₁₈-Alkylen, C₆-C₁₈-Arylen, C₆-C₁₈-Alkarylen und/oder C₆-C₁₈-Aralkylen.

Bevorzugt sind R¹, R² gleich oder verschieden und bedeuten -CR₂³-CO-O-CO-, -CR₂³-CO-NR¹-CO-,-CR₂³-CO-O-CO-CR₂³, -CR₂³-CO-NR¹-CO-CR₂³,
R³, R⁴ sind gleich oder verschieden und bedeuten H, R⁵; R⁵ bedeutet C₁-C₁₈-Alkyl, C₆-C₁₈-Aryl, C₆-C₁₈-Arylalkyl, C₆-C₁₈-Alkylaryl.

Bevorzugt ist R² = R⁴ gleich -CO-CR⁵=CR⁵-CO-; R¹, R³ sind gleich oder verschieden und bedeuten H, R⁵; R⁵ bedeutet C₁-C₁₈-Alkyl, C₆-C₁₈-Aryl, C₆-C₁₈-Arylalkyl, C₆-C₁₈-Alkylaryl.

Bevorzugt können die diesterbildenden Olefine (II) auch intermediar ("in-situ") hergestellt werden und während ihrer Bildung mit dem Alkylphosphonigsäurederivat umgesetzt werden.

Schritt a) der erfindungsgemäßen halogenfreien Verfahren kann dadurch gekennzeichnet sein, dass man
a) eine Phosphinsäurequelle mit nichtesterbildenenden Olefinen (III) in Gegenwart eines Katalysators A bzw. eines Katalysatorsystems A umsetzt,
b) wahlweise Lösungsmittel und/oder Olefin abtrennt,
c) Katalysator A, Katalysatorsystem A, Übergangsmetall und/oder Übergangsmetallverbindung abtrennt,
d) Liganden und/oder Komplexbildner abtrennt,
e) Hilfsmittel und/oder Olefin abtrennt.

Schritt a) der erfindungsgemäßen halogenfreien Verfahren kann dadurch gekennzeichnet sein, dass man eine Phosphinsäurequelle mit Olefinen in Gegenwart eines Katalysators A umsetzt und unlösliches Produkt abfiltriert.

Schritt a) der erfindungsgemäßen halogenfreien Verfahren kann auch dadurch gekennzeichnet sein, dass man
a) eine Phosphinsäurequelle mit nichtesterbildenenden Olefinen (III) in Gegenwart eines Katalysators A umsetzt,
b) wahlweise Katalysator A abfiltriert,
c) Liganden und/oder Komplexbildner abtrennt,
d) Lösemittel abtrennt,
e) ggf. abgetrennten Katalysator oder Liganden und/oder Komplexbildner zu mindestens 90 % in Schritt a) zurückführt.

Besonders bevorzugt sind R⁷, R⁸ R⁹, R¹⁰ des Olefins (III) gleich oder verschieden und bedeuten, unabhängig voneinander, H, Methyl, Ethyl, n-Propyl, Isopropyl, n-Butyl, Isobutyl, tert.-Butyl und/oder Phenyl.

Bevorzugt werden auch funktionalisierte Olefine wie Allylisothiocyanat, Allylmethacrylat, 2-Allylphenol, N-Allylthioharnstoff, 2-(Allylthio)-2-thiazolin, Allyltrimethylsillan, Allylacetat, Allylacetoacetat, Allylalkohol, Allylamin, Allylbenzol, Allylcyanid, Allyl-(cyanacetat), Allylanisol, trans-2-Pentenal, cis-2-Pentennitril, 1-Penten-3-ol, 4-Penten-1-ol, 4-Penten-2-ol, trans-2-Hexenal, trans-2-Hexen-1-ol, cis-3-Hexen-1-ol, 5-Hexen-1-ol, Styrol, -Methylstyrol, 4-Methylstyrol, Vinylacetat, 9-Vinylanthracen, 2-Vinylpyridin, 4-Vinylpyridin und 1-Vinyl-2-pyrrolidon eingesetzt.

Besonders bevorzugt handelt es sich bei den Olefinen um Ethylen, 1-Propylen, 1-Buten, 1-Penten, 1-Hexen und/oder 1,3-Butadien.

Bevorzugt handelt es sich bei den Übergangsmetallen für den Katalysator A um Elemente der siebten und achten Nebengruppe (nach moderner Nomenklatur ein Metall der Gruppe 7, 8, 9 oder 10), wie etwa Rhenium, Ruthenium, Cobalt, Rhodium, Iridium, Nickel, Palladium und Platin.

Bevorzugt werden als Quelle der Übergangsmetalle und Übergangsmetallverbindungen deren Metallsalze verwendet. Geeignete Salze sind solche von Mineralsäuren, die die Anionen Fluorid, Chlorid, Bromid, Iodid, Fluorat, Chlorat, Bromat, Iodat, Fluorit, Chlorit, Bromit, lodit, Hypofluorit, Hypochlorit, Hypobromit, Hypoiodit, Perfluorat, Perchlorat, Perbromat, Periodat, Cyanid, Cyanat, Nitrat, Nitrid, Nitrit, Oxid, Hydroxid, Borat, Sulfat, Sulfit, Sulfid, Persulfat, Thiosulfat, Sulfamat, Phosphat, Phosphit, Hypophosphit, Phosphid, Carbonat und Sulfonat, wie etwa Methansulfonat, Chlorosulfonat, Fluoro-sulfonat, Trifluoromethansulfonat, Benzolsulfonat, Naphthylsulfonat, Toluolsulfonat, t-Butylsulfonat, 2-Hydroxypropansulfonat und sulfonierte lonentauscherharze; und/oder organische Salze, wie etwa Acetylacetonate und Salze einer Carbonsäure mit bis zu 20 Kohlenstoffatomen, wie etwa Format, Acetat, Propionat, Butyrat, Oxalat, Stearat und Zitrat einschließlich halogenierter Carbonsäuren mit bis zu 20 Kohlenstoffatomen, wie etwa Trifluoracetat, Trichloracetat, enthalten.

Eine weitere Quelle der Übergangsmetalle und Übergangsmetallverbindungen stellen Salze der Übergangsmetalle mit Tetraphenylborat- und halogenierten Tetraphenylboratanionen, wie etwa Perfluorophenylborat, dar.

Geeignete Salze beeinhalten ebenso Doppelsalze und Komplexsalze bestehend aus einem oder mehreren Übergangsmetallionen und unabhängig voneinander ein oder mehrere Alkalimetall-, Erdalkalimetall-, Ammonium-, organische Ammonium-, Phosphonium- und organische Phosphoniumionen und unabhängig voneinander ein oder mehrere oben genannter Anionen. Geeignete Doppelsalze stellen z. B. Ammoniumhexachloropalladat und Ammoniumtetrachloropalladat dar.

Bevorzugt ist eine Quelle der Übergangsmetalle das Übergangsmetall als Element und/oder eine Übergangsmetallverbindung in dessen null-wertigem Zustand. Bevorzugt wird das Übergangsmetall metallisch eingesetzt oder als Legierung mit weiteren Metallen verwendet, wobei hier Bor, Zirconium, Tantal, Wolfram, Rhenium, Kobalt, Iridium, Nickel, Palladium, Platin und/oder Gold bevorzugt ist. Dabei ist der Übergangsmetallgehalt in der eingesetzten Legierung bevorzugt 45 - 99,95 Gew.-%.

Bevorzugt wird das Übergangsmetall mikrodispers (Teilchengröße 0,1 mm - 100 µm) eingesetzt.

Bevorzugt wird das Übergangsmetall auf einem Metalloxid wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur, auf einem Metallcarbonat wie etwa Bariumcarbonat, Calciumcarbonat, Strontiumcarbonat, auf einem Metallsulfat wie etwa Bariumsulfat, Calciumsulfat, Strontiumsulfat, auf einem Metallphosphat wie etwa Aluminiumphosphat, Vanadiumphosphat, auf einem Metallcarbid wie etwa Siliconcarbid, auf einem Metallaluminat wie etwa Calciumaluminat, auf einem Metallsilikat wie etwa Aluminiumsilikat, Kreiden, Zeolithe, Bentonit, Montmorillonit, Hectorit, auf funktionalisierten Silikaten, funktionalisierten Silikagelen wie etwa SiliaBond^{®}, QuadraSil™, auf funktionalisierten Polysiloxanen wie etwa Deloxan^{®}, auf einem Metallnitrid, auf Kohle, Aktivkohle, Mullite, Bauxite, Antimonite, Scheelite, Perovskite, Hydrotalcite, Heteropolyanionen, auf funktionalisierter und unfunktionalisierter Cellulose, Chitosan, Keratin, Heteropolyanionen, auf Ionentauschern wie etwa Amberlite™, Amberjet™ , Ambersep™, Dowex^{®}, Lewatit^{®}, ScavNet^{®}, auf funktionalisierten Polymeren wie etwa Chelex^{®}, QuadraPure™, Smopex^{®}, PolyOrgs^{®}, auf polymergebundenen Phosphanen, Phosphanoxiden, Phosphinaten, Phosphonaten, Phosphaten, Aminen, Ammoniumsalzen, Amiden, Thioamiden, Harnstoffen, Thioharnstoffen, Triazinen, Imidazolen, Pyrazolen, Pyridinen, Pyrimidinen, Pyrazinen, Thiolen, Thiolether, Thiolester, Alkoholen, Alkoxiden, Ether, Ester, Carbonsäuren, Acetaten, Acetalen, Peptiden, Hetarenen, Polyethylenimin/Siliciumdioxid und/oder Dendrimeren geträgert verwendet. Geeignete Quellen der Metallsalze und/oder Übergangsmetalle stellen bevorzugt ebenfalls deren Komplexverbindungen dar. Komplexverbindungen der Metallsalze und/oder Übergangsmetalle setzen sich aus den Metallsalzen bzw. Übergangsmetalle und einem oder mehreren Komplexbildnern zusammen. Geeignete Komplexbildner sind z. B. Olefine, Diolefine, Nitrile, Dinitrile, Kohlenmonoxid, Phosphine, Diphosphine, Phosphite, Diphosphite, Dibenzylidenaceton, Cyclopentadienyl, Indenyl oder Styrol. Geeignete Komplexverbindungen der Metallsalze und/oder Übergangsmetalle können auf den oben genannten Trägermaterialien geträgert sein.

Bevorzugt ist der Gehalt an den genannten geträgerten Übergangsmetallen 0,01 bis 20 Gew.-%, vorzugsweise 0,1 bis 10 Gew.-%, insbesondere 0,2 bis 5 Gew.-%, bezogen auf die Gesamtmasse des Trägermaterials.

Geeignete Quellen von Übergangsmetallen und Übergangsmetallverbindungen sind beispielsweise Palladium, Platin, Nickel, Rhodium; Palladium, Platin, Nickel oder Rhodium auf Alumina, auf Silika, auf Bariumcarbonat, auf Bariumsulfat, auf Calciumcarbonat, auf Strontium-carbonat, auf Kohle, auf Aktivkohle; Platin-Palladium-Gold-, Aluminum-Nickel-, Eisen-Nickel-, Lanthanoid-Nickel, Zirconium-Nickel-, Platin-Iridium-, Platin-Rhodium-Legierung; Raney^{®}-Nickel, Nickel-Zink-Eisen-Oxid; Palladium(II)-, Nickel(II)- ,Platin(II)-, Rhodiumchlorid, -bromid, -iodid, -fluorid, -hydrid, -oxid, -peroxid, -cyanid, -sulfat, -nitrat, -phosphid, -borid, -chromoxid, -cobaltoxid, -carbonathydroxid, -cyclohexanbutyrat, -hydroxid, -molybdat, -octanoat, -oxalat, -perchlorat, -phthalocyanin, -5,9,14,18,23,27,32,36-octabutoxy-2,3-naphthalocyanin, -sulfamat, -perchlorat, -thiocyanat, -bis(2,2,6,6-tetramethyl-3,5-heptanedionat), -propionat, -acetat, -stearat, -2-ethylhexanoat, -acetylacetonat, -hexafluoroacetylacetonat, -tetrafluoroborat, -thiosulfat, -trifluoroacetat, -phthalocyanintetrasulfonsäure Tetranatriumsalz, -methyl, -cyclopentadienyl, -methylcyclopentadienyl, -ethylcyclopentadienyl, -pentamethylcyclopentadienyl, -2,3,7,8,12,13,17,18-octaethyl-21H,23H-porphin, -5,10,15,20-tetraphenyl-21H,23H-porphin, -bis(5-[[4-(dimethylamino)phenyl]imino]-8(5H)-quinolinon), -2,11,20,29-tetra-tert-butyl-2,3-naphthalocyanin, -2,9,16,23-tetraphenoxy-29H,31H-phthalocyanin, -5,10,15,20-tetrakis(pentafluorophenyl)-21H,23H-porphin und deren 1,4-Bis(diphenylphosphin)butan-, 1,3-Bis(diphenylphosphino)propan-, 2-(2'-Di-tert-butylphosphin)biphenyl-, Acetonitril-, Benzonitril-, Ethylendiamin-, Chloroform-, 1,2-Bis(phenylsulfinyl)ethan-, 1,3-Bis(2,6-diisopropylphenyl)imidazoliden)(3-chloropyridyl)-, 2'-(Dimethylamino)-2-biphenylyl-, Dinorbornylphosphin-, 2-(Dimethylamino-methyl)ferrocen-, Allyl-, Bis(Diphenylphosphino)butan-, (N-succinimidyl)bis-(triphenyl-phosphin)-, Dimethylphenylphosphin-, Methyldiphenylphosphin-, 1,10-Phenanthrolin-, 1,5-Cyclooctadien-, N,N,N',N'-Tetramethylethylendiamin-, Triphenyl-phosphin-, Tri-o-tolylphosphin-, Tricyclohexylphosphin-, Tributylphosphin-, Triethylphosphin-, 2,2'-Bis(diphenylphosphino)-1,1'-binaphthyl-, 1,3-Bis(2,6-diisopropylphenyl)imidazol-2-yliden-, 1,3-Bis(mesityl)imidazol-2-yliden-, 1,1'-Bis(di-phenylphosphino)ferrocen-, 1,2-Bis(diphenylphosphino)ethan-, N-Methylimidazol-, 2,2'-Bipyridin-, (Bicyclo[2.2.1]-hepta-2,5-dien)-, Bis(di-tert-butyl(4-dimethylaminophenyl)phosphin)-, Bis(tert.-butylisocyanid)-, 2-Methoxyethylether-, Ethylenglycoldimethylether-, 1,2-Dimethoxyethan-, Bis(1,3-diamino-2-propanol)-, Bis(N,N-diethylethylendiamin)-, 1,2-Diaminocyclohexan-, Pyridin-, 2,2':6',2"-terpyridin-, Diethylsulfid-, Ethylen-,Amin-Komplexe; Kalium-, Natrium-, Ammoniumhexachloropalladat(IV), Kalium-, Natrium-, Ammoniumtetrachloropalladat(II), Bromo(tri-tert-butylphosphin)palladium(I) Dimer, (2-Methyl-allyl)palladium(II)chlorid Dimer, Bis(dibenzylidenaceton)palladium(0), Tris(di-benzylidenaceton)dipalladium(0), Tetrakis(triphenylphosphin)palladium(0), Tetrakis-(tricyclohexylphosphin)palladium (0), Bis[1,2-bis(diphenylphosphin)ethan]-palladium(0), Bis(3,5,3',5'-dimethoxydibenzylidenaceton)palladium(0), Bis(tri-tert-butylphosphin)palladium(0), meso-Tetraphenyltetrabenzoporphin Palladium, Tetrakis(methyldiphenylphosphin)palladium(0), Tris(3,3',3"-phophinidyn-tris(benzol-sulfonato)palladium(0) Nonanatriumsalz, 1,3-Bis(2,4,6-trimethylphenyl)-imidazol-2-yliden(1,4-naphthoquinon)palladium(0), 1,3-Bis(2,6-diisopropylphenyl)-imidazol-2-yliden(1,4-naphthoquinon)palladium(0), und deren Chloroform-Komplex; Allylnickel(II)chlorid Dimer, Ammoniumnickel(II)sulfat, Bis(1,5-cyclooctadien)nickel(0), Bis(triphenylphosphin)dicarbonylnickel(0), Tetrakis(triphenylphosphin)nickel(0), Tetrakis(triphenylphosphit)nickel(0), Kaliumhexafluoronickelat(IV), Kaliumtetracyanonickelat(II), Kaliumnickel(IV)paraperiodat, Dilithiumtetrabromonickelat(II), Kaliumtetracyanonickelat(II); Platin(IV)chlorid, -oxid, -sulfid, Kalium-, Natrium-, Ammoniumhexachloroplatinat(IV), Kalium-, Ammoniumtetrachloroplatinat(II), Kaliumtetracyanoplatinat(II), Trimethyl(methylcyclopentadienyl)platin(IV), cis-Diammintetrachloroplatin(IV), Kaliumtrichloro(ethylen)platinat(II), Natriumhexahydroxyplatinat(IV), Tetraaminplatin(II)tetrachloroplatinat(II), Tetrabutylammoniumhexachloroplatinat(IV), Ethylenbis(triphenylphosphin)platin(0), Platin(0)-1,3-divinyl-1,1,3,3-tetramethyldisiloxan, Platin(0)-2,4,6,8-tetramethyl-2,4,6,8-tetravinylcyclotetrasiloxan, Tetrakis(triphenyl-phosphin)platin(0), Platinoctaethylporphyrin, Chloroplatinsäure, Carboplatin; Chlorobis(ethylen)rhodium Dimer, Hexarhodiumhexadecacarbonyl, Chloro(1,5-cyclooctadien)rhodium Dimer, Chloro(norbomadien)-rhodium Dimer, Chloro(1,5-hexadien)rhodium Dimer.

Bevorzugt handelt es sich bei den Liganden um Phosphine der Formel (IV)

PR¹¹₃ (IV)

in der die Reste R¹¹ unabhängig voneinander für Wasserstoff, geradkettiges, verzweigtes oder cyclisches C₁-C₂₀-Alkyl, C₆-C₂₀-Alkylaryl, C₂-C₂₀-Alkenyl, C₂-C₂₀-Alkinyl, C₁-C₂₀-Carboxylat, C₁-C₂₀-Alkoxy, C₂-C₂₀-Alkenyloxy, C₂-C₂₀-Alkinyloxy, C₂-C₂₀-Alkoxycarbonyl, C₁-C₂₀-Alkylthio, C₁-C₂₀-Alkylsulfonyl, C₁-C₂₀-Alkylsulfinyl, Silyl und/oder deren Derivative und/oder durch wenigstens ein R¹² substituiertes Phenyl- oder durch wenigstens ein R¹² substituiertes Naphtyl stehen. R¹² steht unabhängig voneinander für Wasserstoff, Fluor, Chlor, Brom, Iod, NH₂, Nitro, Hydroxy, Cyano, Formyl, geradkettiges, verzweigtes oder cyclisches C₁-C₂₀-Alkyl, C₁-C₂₀-Alkoxy, HN(C₁-C₂₀-Alkyl), N(C₁-C₂₀-Alkyl)₂, -CO₂-(C₁-C₂₀-Alkyl), -CON(C₁-C₂₀-Alkyl)₂, -OCO(C₁-C₂₀-Alkyl), NHCO(C₁-C₂₀-Alkyl), C₁-C₂₀-Acyl, -SO₃M, -SO₂N(R¹³)M, -CO₂M, -PO₃M₂, -AsO₃M₂, -SiO₂M, -C(CF₃)₂OM (M = H, Li, Na oder K), wobei R¹³ Wasserstoff, Fluor, Chlor, Brom, Iod, geradkettiges, verzweigtes oder cyclisches C₁-C₂₀-Alkyl, C₂-C₂₀-Alkenyl, C₂-C₂₀-Alkinyl, C₁-C₂₀-Carboxylat, C₁-C₂₀-Alkoxy, C₂-C₂₀-Alkenyloxy, C₂-C₂₀-Alkinyloxy, C₂-C₂₀-Alkoxycarbonyl, C₁-C₂₀-Alkylthio, C₁-C₂₀-Alkylsulfonyl, C₁-C₂₀-Alkylsulfinyl, Silyl und/oder deren Derivative, Aryl, C₆-C₂₀-Arylalkyl, C₆-C₂₀-Alkylaryl, Phenyl und/oder Biphenyl bedeutet. Vorzugsweise sind alle Gruppen R¹¹ identisch.

Geeignete Phosphine (IV) sind beispielsweise Trimethyl-, Triethyl-, Tripropyl-, Triisopropyl-, Tributyl-, Triisobutyl-, Triisopentyl-, Trihexyl-, Tricyclohexyl-, Trioctyl-, Tridecyl-, Triphenyl-, Diphenylmethyl-, Phenyldimethyl-, Tri(o-tolyl)-, Tri(p-tolyl)-, Ethyldiphenyl-, Dicyclohexylphenyl-, 2-Pyridyldiphenyl-, Bis(6-methyl-2pyridyl)-phenyl-, Tri-(p-chlorophenyl)-, Tri-(p-methoxyphenyl)-, Diphenyl(2-sulfonatophenyl)phosphin; Kalium-, Natrium- und Ammoniumsalze von Diphenyl(3-sulfonatophenyl)phosphin, Bis(4,6-dimethyl-3-sulfonatophenyl)(2,4-dimethylphenyl)phosphin, Bis(3-sulfonato-phenyl)phenylphosphinen, Tris(4,6-dimethyl-3-sulfonatophenyl)phosphinen, Tris(2-sulfonatophenyl)phosphinen, Tris(3-sulfonatophenyl)phosphinen; 2-Bis(diphenylphos-phinoethyl)trimethylammoniumiodid, 2'-Dicyclohexylphosphino-2,6-dimethoxy-3-sulfonato-1,1'-biphenyl Natriumsalz, Trimethylphosphit und/oder Triphenylphosphit.

Besonders bevorzugt handelt es sich bei den Liganden um bidentate Liganden der allgemeinen Formel

R¹¹M"-Z-M" R¹¹ (V).

In dieser Formel repräsentieren M" unabhängig voneinander N, P, As oder Sb. Bevorzugt sind die beiden M" gleich und besonders bevorzugt steht M" für ein Phosphoratom.

Jede Gruppe R¹¹ repräsentiert unabhängig voneinander die unter Formel (VI) beschrieben Reste. Vorzugsweise sind alle Gruppen R¹¹ identisch.

Z stellt bevorzugt eine bivalente Überbrückungsgruppe dar, die wenigstens 1 Brückenatom enthält, wobei bevorzugt 2 bis 6 Brückenatome enthalten sind. Brückenatome können ausgewählt werden aus C-, N-, O-, Si- und S-Atomen. Bevorzugt ist Z eine organische Überbrückungsgruppe, die wenigstens ein Kohlenstoffatom enthält. Bevorzugt ist Z eine organische Überbrückungsgruppe, die 1 bis 6 Brückenatome enthält, wovon wenigstens zwei Kohlenstoffatome sind, die unsubstituiert oder substituiert sein können.

Bevorzugte Gruppen Z sind -CH₂-, -CH₂-CH₂-, -CH₂-CH₂-CH₂-, -CH₂-CH(CH₃)-CH₂-, -CH₂-C(CH₃)₂-CH₂-, -CH₂-C(C₂H₅)-CH₂-, -CH₂-Si(CH₃)₂-CH₂-, -CH₂-O-CH₂-, -CH₂-CH₂-CH₂-CH₂-, -CH₂-CH(C₂H₅)-CH₂-, -CH₂-CH(n-Pr)-CH und -CH₂-CH(n-Bu)-CH₂-, unsubstituierte oder substituierte 1,2-Phenyl-, 1,2-Cyclohexyl-, 1,1'- oder 1,2-Ferrocenyl-Reste, 2,2'-(1,1 '-Biphenyl)-, 4,5-Xanthen- und/oder Oxydi-2,1-phenylen-Reste.

Geeignete bidentate Phosphinliganden (V) sind beispielsweise 1,2-Bis(dimethyl-), 1,2-Bis(diethyl-), 1,2-Bis(dipropyl-), 1,2-Bis(diisopropyl-), 1,2-Bis(dibutyl-), 1,2-Bis(di-tert.-butyl-), 1,2-Bis(dicyclohexyl-) und 1,2-Bis(diphenylphosphino)ethan; 1,3-Bis(dicyclohexyl-), 1,3-Bis(diisopropyl-), 1,3-Bis(di-tert.-butyl-) und 1,3-Bis(diphenyl-phosphino)propan; 1,4-Bis-(diisopropyl-) und 1,4-Bis(diphenylphosphino)butan; 1,5-Bis(dicyclohexylphosphino)pentan; 1,2-Bis(di-tert.-butyl-), 1,2-Bis(di-phenyl-), 1,2-Bis(di-cyclohexyl-), 1,2-Bis(dicyclo-pentyl-), 1,3-Bis(di-tert.-butyl-), 1,3-Bis(diphenyl-), 1,3 Bis(di-cyclohexyl-) und 1,3-Bis(dicyclopentylphosphino)benzol; 9,9-Dimethyl-4,5-bis(diphenylphosphino)xanthen, 9,9-Dimethyl-4,5-bis(diphenylphosphino)-2,7-di-tert.-butylxanthen, 9,9-Dimethyl-4,5-bis(di-tert.-butylphosphino)xanthen, 1,1'-Bis(diphenyl-phosphino)-ferrocen, 2,2'-Bis(diphenylphosphino)-1,1'-binaphthyl, 2,2'-Bis(di-p-tolylphosphino)-1,1'-binaphthyl, (Oxydi-2,1-phenylen)bis(diphenylphosphin), 2,5-(Di-isopropylphospholano)benzol, 2,3-O-Isopropropyliden-2,3-dihydroxy-1,4-bis(diphenyl-phosphino)butan, 2,2'-Bis(di-tert.-butylphosphino)-1,1'-biphenyl, 2,2'-Bis(dicyclohexyl-phosphino)-1,1'-biphenyl, 2,2'-Bis(diphenylphosphino)-1,1'-biphenyl, 2-(Di-tert.-butylphosphino)-2'-(N,N-dimethylamino)biphenyl, 2-(Dicyclohexylphosphino)-2'-(N,N-dimethylamino)biphenyl, 2-(Diphenylphosphino)-2'-(N,N-dimethylamino)biphenyl, 2-(Diphenylphosphino)ethylamin, 2-[2-(Diphenylphosphino)ethyl]pyridin; Kalium-, Natrium- und Ammoniumsalze von 1,2-Bis(di-4-sulfonatophenylphosphino)-benzol, (2,2'-Bis [[bis(3-sulfonato-phenyl)phosphino]methyl]-4,4',7,7'-tetrasulfonato-1,1'-binapthyl, (2,2'-Bis[[bis(3-sulfonatophenyl)phosphino]methyl]-5,5'-tetrasulfonato-1,1'-biphenyl, (2,2'-Bis [[bis(3-sulfonatophenyl)phosphino]methyl]-1,1'-binapthyl, (2,2'-Bis[[bis(3-sulfonatophenyl)phosphino]-methyl]-1,1'-biphenyl, 9,9-Dimethyl-4,5-bis(diphenylphosphino)-2,7-sulfonatoxanthen, 9,9-Dimethyl-4,5-bis(di-tert.-butylphosphino)-2,7-sulfonatoxanthen, 1,2-Bis(di-4-sulfonatophenylphosphino)-benzol, Meso-tetrakis(4-sulfonatophenyl)porphin, Meso-tetrakis(2,6-dichloro-3-sulfonatophenyl)porphin, Meso-tetrakis(3-sulfonatomesityl)porphin, Tetrakis(4-carboxyphenyl)porphin und 5,11,17,23-Sulfonato-25,26,27,28-tetrahydroxycalix[4]aren.

Zudem können die Liganden der Formel (IV) und (V) durch die Reste R¹¹ und/oder die Überbrückungsgruppe an ein geeignetes Polymer oder anorganisches Substrat gebunden sein.

Das Katalysatorsystem hat ein Übergangsmetall-Ligand-Molverhältnis von 1:0,01 bis 1:100, bevorzugt von 1:0,05 bis 1:10 und insbesondere von 1:1 bis 1:4.

Bevorzugt erfolgen die Umsetzungen in den Verfahrensstufen a), b) und c) wahlweise in einer Atmosphäre, die weitere gasförmige Bestandteile wie zum Beispiel Stickstoff, Sauerstoff, Argon, Kohlendioxid enthält; die Temperatur beträgt -20 bis 340 °C, insbesondere 20 bis 180 °C und der Gesamtdruck von 1 bis 100 bar.

Die Isolierung der Produkte und/oder der Komponente und/oder des Übergangsmetalls und/oder der Übergangsmetallverbindung und/oder Katalysatorsystems und/oder des Liganden und/oder der Edukte nach den Verfahrensstufen a), b) und c) erfolgt wahlweise durch Destillation oder Rektifikation, durch Kristallisation oder Fällen, durch Filtration oder Zentrifugieren, durch Adsorption oder Chromatographie oder anderen bekannten Methoden. Erfindungsgemäß werden Lösungsmittel, Hilfsmittel und ggf. andere flüchtige Bestandteile durch z. B. Destillation, Filtration und/oder Extraktion abgetrennt.

Bevorzugt erfolgt die Umsetzungen in den Verfahrensstufen a), b) und c) wahlweise in Absorptionskolonnen, Sprühtürmen, Blasensäulen, Rührkesseln, Rieselbettreaktor, Strömumgsrohren, Schlaufenreaktoren und/oder Knetern.

Geeignete Mischorgane sind z. B. Anker-, Blatt-, MIG-, Propeller-, Impeller-, Turbinen-, Kreuz-Rührer, Dispergierscheiben, Hohl-(Begasungs-)-Rührer, Rotor-Stator-Mischer, statische Mischer, Venturi-Düsen und/oder Mammutpumpen.

Bevorzugt erfahren die Reaktionslösungen/-mischungen dabei eine Mischintensität, die einer Rotations-Reynolds-Zahl von 1 bis 1.000.000, bevorzugt von 100 bis 100.000 entspricht.

Bevorzugt erfolgt eine intensive Durchmischung der jeweiligen Reaktionspartner etc. unter einem Energieeintrag von 0,080 bis 10 kW/m³, bevorzugt 0,30 - 1,65 kW/m³.

Bevorzugt wirkt der Katalysator A während der Umsetzung homogen und/oder heterogen. Daher wirkt der jeweils heterogen wirkende Katalysator während der Umsetzung als Suspension oder an eine feste Phase gebunden.

Bevorzugt wird der Katalysator A vor der Umsetzung und/oder zu Beginn der Umsetzung und/oder während der Umsetzung in situ generiert.

Bevorzugt erfolgt die jeweilige Umsetzung in einem Lösungsmittel als Ein-Phasen-System in homogener oder heterogener Mischung und/oder in der Gasphase.

Wird ein Mehr-Phasen-System verwendet kann zusätzlich ein Phasentransferkatalysor eingesetzt werden.

Die erfindungsgemäßen Reaktionen können in flüssiger Phase, in der Gasphase oder in überkritischer Phase durchgeführt werden. Dabei wird der Katalysator A bei Flüssigkeiten vorzugsweise homogen oder als Suspension eingesetzt, während bei Gasphasen- oder überkritischer Fahrweise eine Festbettanordnung von Vorteil ist.

Geeignete Lösungsmittel sind Wasser, Alkohole wie z. B. Methanol, Ethanol, i-Propanol, n-Propanol, n-Butanol, i-Butanol, t-Butanol, n-Amylalkohol, i-Amylalkohol, t-Amylalkohol, n-Hexanol, n-Octanol, i-Octanol, n-Tridecanol, Benzylalkohol etc. Bevorzugt sind weiterhin Glycole wie z. B. Ethylenglycol, 1,2-Propandiol, 1,3-Propandiol, 1,3-Butandiol, 1,4-Butandiol, Diethylenglycol etc.; aliphatische Kohlenwasserstoffe wie Pentan, Hexan, Heptan, Octan, und Petrolether, Petroleumbenzin, Kerosin, Petroleum, Paraffinöl etc.; aromatische Kohlenwasserstoffe wie Benzol, Toluol, Xylol, Mesitylen, Ethylbenzol, Diethylbenzol etc.; Halogenkohlenwasserstoffe wie Methylenchlorid, Chloroform, 1,2-Dichloroethan, Chlorobenzol, Tetrachlorkohlenstoff, Tetrabromoethylen etc.; alicyclische Kohlenwasserstoffe wie Cyclopentan, Cyclohexan und Methylcyclohexan etc.; Ether wie Anisol (Methylphenylether), t-Butylmethylether, Dibenzylether, Diethylether, Dioxan, Diphenylether, Methylvinylether, Tetrahydrofuran, Triisopropylether etc.; Glycolether wie Diethylenglycoldiethylether, Diethylenglycoldi-methylether (Diglyme), Diethylenglycolmonobutylether, Diethylenglycolmonomethyl-ether, 1,2-Dimethoxyethan (DME Monoglyme), Ethylenglycolmonobutylether, Triethylenglycoldimethylether (Triglyme), Triethylenglycolmonomethylether etc.; Ketone wie Aceton, Diisobutylketon, Methyl-n-propylketon; Methylethylketon, Methyl-i-butylketon etc; Ester wie Methylformat, Methylacetat, Ethylacetat, n-Propylacetat und n-Butylacetat etc.; Carbonsäuren wie Ameisensäure, Essigsäure, Propionsäure, Buttersäure etc.; einzeln oder in Kombination miteinander.

Geeignete Lösungsmittel sind auch die eingesetzten Olefine und Phosphinsäurequellen. Diese bieten Vorteile in Form einer höheren Raum-ZeitAusbeute.

Bevorzugt wird die Umsetzung unter dem eigenen Dampfdruck des Olefins und/oder des Lösungsmittels durchgeführt.

Bevorzugt erfolgt die Umsetzung bei einem Partialdruck des Olefins von 0,01 - 100 bar, besonders bevorzugt bei einem Partialdruck des Olefins von 0,1 - 10 bar.

Bevorzugt erfolgt die Umsetzung in einem Phosphinsäure-Olefin-Molverhältnis von 1:10.000 bis 1:0,001, besonders bevorzugt im Verhältnis von 1:30 bis 1:0,01.

Bevorzugt erfolgt die Umsetzung in einem Phosphinsäure-Katalysator-Molverhältnis von 1:1 bis 1:0,00000001, besonders bevorzugt bei 1:0,01 bis 1:0,000001.

Bevorzugt erfolgt die Umsetzung in einem Phosphinsäure-Lösungsmittel-Molverhältnis von 1:10.000 bis 1:0, besonders bevorzugt bei 1:50 bis 1:1.

Ein erfindungsgemäßes Verfahren zur Herstellung von Alkylphosphonigsäuren und deren Derivaten (I) ist dadurch gekennzeichnet, dass man eine Phosphinsäurequelle mit Olefinen in Gegenwart eines Katalysators umsetzt und das Produkt (I) (Alkylphosphonigsäure bzw. -salze, -ester) von Katalysator, Übergangsmetall bzw. Übergangsmetallverbindung, Ligand, Komplexbildner, Salzen und Nebenprodukten befreit wird.

Erfindungsgemäß wird der Katalysator, das Katalysatorsystem, das Übergangsmetall und/oder die Übergangsmetallverbindung abgetrennt durch Zugabe eines Hilfsmittels 1 und Entfernen des Katalysators, des Katalysatorsystems, des Übergangsmetalls und/oder der Übergangsmetallverbindung durch Extraktion und/oder Filtration.

Erfindungsgemäß wird der Ligand und/oder Komplexbildner durch Extraktion mit Hilfsmittel 2 und/oder Destillation mit Hilfsmittel 2 abgetrennt.

Hilfsmittel 1 ist bevorzugt Wasser und/oder mindestens ein Vertreter der Familie der Metallfänger (Metal Scavenger). Bevorzugte Metallfänger sind Metalloxide wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur; Metallcarbonate wie etwa Bariumcarbonat, Calciumcarbonat, Strontiumcarbonat; Metallsulfate wie etwa Bariumsulfat, Calciumsulfat, Strontiumsulfat; Metallphosphate wie etwa Aluminiumphosphat, Vanadiumphosphat Metallcarbide wie etwa Siliconcarbid; Metallaluminate wie etwa Calciumaluminat; Metallsilikate wie etwa Aluminiumsilikat, Kreiden, Zeolithe, Bentonit, Montmorillonit, Hectorit; funktionalisierte Silikate, funktionalisierte Silikagele wie etwa SiliaBond^{®}, QuadraSil™; funktionalisierte Polysiloxane wie etwa Deloxan^{®}; Metallnitride, Kohle, Aktivkohle, Mullite, Bauxite, Antimonite, Scheelite, Perovskite, Hydrotalcite, funktionalisierte und unfunktionalisierte Cellulose, Chitosan, Keratin, Heteropolyanionen, lonentauscher wie etwa Amberlite™, Amberjet™, Ambersep™, Dowex^{®}, Lewatit^{®}, ScavNet^{®}; funktionalisierte Polymere wie etwa Chelex^{®}, QuadraPure™, Smopex^{®}, PolyOrgs^{®}; polymergebundene Phosphane, Phosphanoxide, Phosphinate, Phosphonate, Phosphate, Amine, Ammoniumsalze, Amide, Thioamide, Harnstoffe, Thioharnstoffe, Triazine, Imidazole, Pyrazole, Pyridine, Pyrimidine, Pyrazine, Thiole, Thiolether, Thiolester, Alkohole, Alkoxide, Ether, Ester, Carbonsäuren, Acetate, Acetale, Peptide, Hetarene, Polyethylenimin/Siliciumdioxid und/oder Dendrimere.

Bevorzugt wird Hilfsmittel 1 in Mengen zugesetzt, die einer 0,1 - 40 gew.-%igen Beladung des Metalls auf dem Hilfsmittel 1 entsprechen.

Bevorzugt wird Hilfsmittel 1 bei Temperaturen von 20 - 90 °C eingesetzt.

Bevorzugt beträgt die Verweilzeit von Hilfsmittel 1 0,5 - 360 Minuten.

Hilfsmittel 2 ist bevorzugt das vorgenannte, erfindungsgemäße Lösungsmittel, wie sie bevorzugt in der Verfahrensstufe a) eingesetzt werden.

Bevorzugt erfolgt der Schritt b) in den erfindungsgemäßen Verfahren mit Zusatz eines Katalysators B. Bevorzugt sind Brönstedsäuren, Basen, Radikalinitiatoren und Photoinitiatoren.

Bevorzugte Basen sind organische Basen und/oder metallorganische Basen.

Bevorzugte metallorganische Basen sind Alkoholate der 1. und 2. Hauptgruppe und der 4. Nebengruppe. Besonders bevorzugt sind Natriummethanolat, Natriumethanolat, Natriumbutanolat, Kaliummethanolat, Kaliumethanolat, Kaliumbutanolat, Titan(IV)propylat und/oder Titan(IV)butylat.

Bevorzugte Katalysatoren B sind auch Metalle, Metallhydride wie zum Beispiel Lithium, Lithiumhydrid, Lithiumaluminiumhydrid, Methyllithium, Butyllithium, tert-Butyllithium, Lithiumdiisopropylamid, Natrium, Natriumhydrid, Natriumborhydrid.

Bevorzugte Radikalinitiatoren für Schritt b) sind Peroxo-Verbindungen wie Peroxo-monoschwefelsäure, Kaliumpersulfat (Kaliumperoxomonosulfat), Caroat™, Oxone™, Peroxodischwefelsäure, Kaliumpersulfat (Kaliumperoxodisulfat), Natriumpersulfat (Natriumperoxodisulfat), Ammoniumpersulfat (Ammoniumperoxodisulfat).

Besonders bevorzugt sind Verbindungen, die im Lösemittelsystem von Schritt b) Peroxide bilden können wie Natriumperoxid, Natriumperoxidediperoxohydrat, Natriumperoxiddiperoxohydrathydrat, Natriumperoxidedihydrat, Natriumperoxidocta-hydrat, Lithiumperoxid, Lithiumperoxidmonoperoxohydrattrihydrat, Calciumperoxid, Strontiumperoxid, Bariumperoxid, Magnesiumperoxid, Zinkperoxid, Kaliumhyperoxid, Kaliumperoxiddiperoxohydrat, Natriumperoxoboratetetrahydrat, Natriumperoxoborat-trihydrat, Natriumperoxoboratmonohydrat, wasserfreies Natriumperoxoborat, Kaliumper-oxoboratperoxohydrat, Magnesiumperoxoborat, Calciumperoxoborat, Bariumperoxo-borat, Strontiumperoxoborat, Kaliumperoxoborat, Peroxomonophosphorsäure, Peroxodiphosphorsäure, Kaliumperoxodiphosphat, Ammoniumperoxodiphosphat, Kaliumammoniumperoxodiphosphate (Doppelsalz), Natriumcarbonatperoxohydrat, Harnstoffperoxohydrat, Ammoniumoxalatperoxid, Bariumperoxidperoxohydrat, Bariumperoxidperoxohydrat, Calciumhydrogenperoxide, Calciumperoxidperoxohydrat, Ammoniumtriphosphatediperoxophosphathydrat, Kaliumfluoridperoxohydrat, Kaliumfluoridtriperoxohydrat, Kaliumfluoriddiperoxohydrat, Natriumpyrophosphatdiperoxohydrat, Natriumpyrophosphatdiperoxohydratoctahydrat, Kaliumacetatperoxohydrat, Natriumphosphatperoxohydrat, Natriumsilicatperoxohydrat.

Bevorzugte Katalysatoren B sind Wasserstoffperoxid, Perameisensäure, Peressigsäure, Benzoylperoxid, Di-tert-butylperoxid, Dicumylperoxid, 2,4-Dichlorobenzoylperoxid, Decanoylperoxid, Laurylperoxid, Cumolhydroperoxid, Pinenhydroperoxid, p-Menthanhydroperoxid, tert-Butylhydroperoxid, Acetylacetonperoxid, Methylethylketonperoxid, Bernsteinsäureperoxid, Dicetylperoxydicarbonat, tert-Butylperoxyacetat, tert-Butylperoxymaleinsäure, tert-Butylperoxybenzoat, Acetylcyclohexylsulfonylperoxid.

Bevorzugt werden als Radikalinitiatoren für Schritt b) wasserlösliche Azoinitiatoren eingesetzt. Bevorzugt sind Azoinitiatoren wie VAZO^{®} 52 2,2'-Azobis(2,4-dimethyl-valeronitril), VAZO^{®} 64 (Azo-bis-(isobutyronitril), AIBN), VAZO^{®} 67 2,2'-Azobis(2-methylbutyronitril), VAZO^{®} 88 1,1'-Azobis(cyclohexane-1-carbonitril), VAZO^{®} 68 der Fa. Dupont-Biesteritz, V-70 2,2'-Azobis(4-methoxy-2,4-dimethyl valeronitril), V-65 2,2'-Azobis(2,4-dimethyl-valeronitril), V-601 Dimethyl 2,2'-azobis(2-methylpropionat), V-59 2,2'-Azobis(2-methylbutyronitril), V-40 1,1'-Azobis(cyclohexane-1-carbonitril), VF-096 2,2'-Azobis[N-(2-propenyl)-2-methylpropionamid], V-30 1-[(cyano-1-methylethyl)azo]formamid, VAm-110 2,2'-Azobis(N-butyl-2-methyl-propionamid), VAm-111 2,2'-Azobis(N-cyclohexyl-2-methylpropionamid), VA-046B 2,2'-Azobis[2-(2-imidazolin-2-yl)propandisulfatedi-hydrate, VA-057 2,2'-Azobis[N-(2-carboxyethyl)-2-methylpropionamidin]tetrahydrat, VA-061 2,2'-Azobis[2-(2-imidazolin-2-yl)propan], VA-080 2,2'-Azobis{2-methyl-N-[1,1-bis(hydroxymethyl)-2-hydroxyethyl] propionamid, VA-085 2,2'-Azobis{2-methyl-N-[2-(1-hydroxybuthyl)]propionamid}, VA-086 2,2'-Azobis[2-methyl-N-(2-hydroxyethyl)-propionamid] von Wako Chemicals.

Geeignet sind auch Azoinitiatoren wie 2-tert-Butylazo-2-cyanopropan, Dimethylazodiiso-butyrat, Azodiisobutyronitril, 2-tert-Butylazo-1-cyanocyclohexan, 1-tert-Amylazo-1-cyanocyclohexan. Weiterhin sind bevorzugt Alkylperketale wie 2,2-Bis-(tert-butylper-oxy)-butan, Ethyl-3,3-bis(tert-butylperoxy)butyrat, 1,1-Di-(tert-butylperoxy)cyclohexan.

Bevorzugt ist das Verhältnis von Katalysator B zu Alkylphosphonigsäurederivat in Schritt b) 1 zu 100 bis 100 zu 1, besonders bevorzugt 1 zu 50 bis 1 zu 1.

Bevorzugt ist das Verhältnis von Lösungsmittel zu Alkylphosphonigsäurederivat in Schritt b) 1 zu 1.000 bis 50 zu 1.

Bevorzugt wird der Iniator B mit einer Geschwindigkeit von 0,01 bis 10 mol-% Katalysator pro Stunde, bezogen auf die phosphorhaltige Verbindung, zudosiert.

Bevorzugt wird die Umsetzung in Schritt b) unter dem eigenen Dampfdruck des diesterbildenden Olefins (II) und/oder des Lösungsmittels durchgeführt.

Geeignete Lösungsmittel sind die für Schritt a) genannten Lösungsmittel.

Bevorzugt erfolgt die Umsetzung in Schritt b) bei einem Partialdruck des diesterbildenden Olefins von 0,01 - 100 bar.

Bevorzugt wird die Umsetzung in Schritt b) der bei einer Temperatur von 0 bis 250 °C, besonders bevorzugt bei einer Temperatur von 20 bis 200 °C und insbesondere bei einer Temperatur von 50 bis 150 °C durchgeführt.

Bevorzugt erfolgt die Umsetzung in Schritt b) bei einem Gesamtdruck von 1 bis 100 bar.

Gegenstand der Erfindung ist zudem ein Verfahren zur kontinuierlichen Herstellung von Addukten von Alkylphosphonigsäurederivaten (I) und diesterbildenden Olefinen (II) durch Umsetzung von Alkylphosphonigsäureestern (I) mit esterbildenden Olefinen in Gegenwart von Metallalkoholaten (Katalysator B), das dadurch gekennzeichnet ist, dass man
a) in einem zur Kreislaufführung des Reaktionsgemisches ausgebildeten, in sich geschlossenen und mit Kühleinrichtungen sowie Überlauf versehenen Reaktor eine dem Reaktorvoiumen entsprechende Volumenmenge des herzustellenden Adduktes von Alkylphosphonigsäurederivat und diesterbildenden Olefin, gegebenenfalls im Gemisch mit dem Metallalkoholat entsprechenden Alkohol als Lösungsmittel, vorlegt und im Kreislauf führt; dass man
b) in den Reaktor kontinuierlich den Alkylphosphonigsäureester (I), esterbildendes Olefin (II) sowie eine alkoholische Lösung des Metallalkoholats unter Kühlung des im Kreislauf geführten Reaktorinhaltes einleitet und bei einer Temperatur von etwa 0 bis 80 °C im Verlauf von etwa 5 - 120 Minuten umsetzt, wobei das Molverhältnis des Alkylphosphonigsäureesters (I) zu dem esterbildenden Olefin (II) etwa 1 zu 0,9 - 2 und die Menge des Metallalkoholats, bezogen auf den Alkylphosphonigsäureester (I), etwa 0,1 bis 5 Mol-% beträgt; und dass man
c) über den Überlauf des Reaktors kontinuierlich ein das Verfahrensprodukt enthaltendes Gemisch abzieht und aus dem Gemisch das Addukt von Alkylphosphonigsäurederivat und diesterbildenden Olefin abtrennt.

Eine bevorzugte Ausführungsform des erfindungsgemäßen Verfahrens besteht darin, dass man die Umsetzung der Reaktionskomponenten bei einer Temperatur von 20 bis 50 °C durchführt. Die Beschickung des Reaktors mit den Reaktionskomponenten und der Katalysatorlösung kann beispielsweise derart erfolgen, dass man
a) den Alkylphosphonigsäureester (I), das esterbildende Olefin (II) sowie die alkoholische Lösung des Metallalkoholats getrennt in den Reaktor einleitet
b) ein Gemisch des Alkylphosphonigsäureesters (I) mit dem esterbildenden Olefin (II), getrennt von der alkoholischen Lösung des Metallalkoholats, in den Reaktor einleitet oder
c) ein Gemisch des Alkylphosphonigsäureesters (I) mit der alkoholischen Lösung des Metallalkoholats, getrennt von dem esterbildenden Olefin (II), in den Reaktor einleitet.

Die Esterreste des Alkylphosphonigsäureesters (I) und des esterbildenden Olefins (II) können gleich oder verschieden sein. Weiterhin ist es zweckmäßig, wenn der als Lösungsmittel eingesetzte Alkohol und/oder die alkoholische Komponente des Metallalkoholats entweder der alkoholischen Komponente des Alkylphosphonigsäureesters (I) und/oder der des esterbildenden Olefin (II) entspricht.

Schließlich bestehen bevorzugte Merkmale der Erfindung darin, dass das Molverhältnis von Alkylphosphonigsäureester (I) zu esterbildendem Olefin (II) 1 zu 1 - 1,3, die Menge an Katalysator B bezogen auf den Alkylphosphonigsäureester (I) 1 - 5 mol-% und die Menge des als Lösungsmittel eingesetzten Alkohols 0,1 - 1.000 Mol pro Mol Alkylphosphonigsäureester (I) beträgt.

Setzt man Alkylphosphonigsäureester (I) und esterbildendem Olefin (II) mit unterschiedlichen Esterresten sowie einer diesen Esterresten entsprechenden alkoholischen Metallalkoholatlösung ein, wird ein Mischprodukt erhalten.

Gemäß der erfindungsgemäßen Verfahrensweise wird es ermöglicht, in technischem Maßstab kontinuierlich Addukte von Alkylphosphonigsäurederivat und diesterbildenden Olefin in einer bisher nicht erreichten Ausbeute von ca. 95 % der Theorie herzustellen.

Bevorzugt werden in Schritt b) die leichtflüchtigen Komponenten im Vakuum bei 0,01 bis 1 bar entfernt.

Bevorzugt ist die Verwendung der erfindungsgemäßen Addukten von Alkylphosphonigsäurederivaten (I) und diesterbildenden Olefinen (II)
- als Binder z. B. für Gießereimassen und Formsande;
- als Vernetzer bzw. Beschleuniger beim Aushärten von Epoxyharzen, Polyurethanen, ungesättigten Polyesterharzen;
- als Polymerstabilisatoren, z. B. als Lichtschutzstabilisator und/oder Thermostabilisatoren für Baumwollgewebe, Polymerfasern, Kunststoffe;
- als Pflanzenschutzmittel, z. B. als Pflanzenwachstumsregulator, als Herbizid, Herbicid, Pestizid, (Boden-)Fungizid;
- als Diagnosticum, Therapeutikum oder Additiv in Therapeutika für Menschen und Tiere, z. B. als Enzymmodulator, zur Stimulierung von Gewebewachstum;
- als Sequestrierungsmittel z.B. zur Kontrolle von Ablagerungen in industriellen Wasserleitungssystemen, bei der Mineralölgewinnung und in Metallbehandlungsmitteln;
- als Mineralöl-Additiv z. B. als Antioxidans und zur Erhöhung der Octanzahl;
- als Korrosionsschutzmittel;
- in Wasch- und Reinigungsmittelanwendungen, z. B. als Entfärbungsmittel;
- in Elektronikanwendungen z. B. in Polyelektrolyten für Kondensatoren, Batterien und Akkumulatoren, sowie als Radikalfänger in photosensitiven Schichten;
- Polymerizationskatalysator für Polyester;
- copolykondensierbares Flammschutzmittel für Polyester- und Polyamidfasern;
- Polyester Masterbatch;
- Hitze-, Lichtstabilisator für Polymere;
- Als Zwischenprodukte für Angiotensin-umwandelnde Enzyminhibitoren;
- Als Alanylaminopeptidase-Inhibitoren zur funktionalen Zellbeeinflussung und Behandlung immunologischer, entzündlicher, neuronaler und anderer Erkrankungen oder als Zwischenprodukt zu deren Herstellung;
- Als Dipeptidylpeptidase IV Inhibitor oder als Zwischenprodukt zu deren Herstellung;
- Als Inhibitors von Epoxidhydrolase für die Behandlung von Bluthochdruck oder als Zwischenprodukt zu deren Herstellung;
- Zur Faservorbehandlung, -oberflächenmodifizierung.

Bevorzugt ist die Verwendung der erfindungsgemäßen Addukte von Alkylphosphonigsäurederivaten (I) und diesterbildenden Olefinen (II) zur Herstellung von Estern (und Polyestern) durch Veresterung in Schritt c) des Verfahrens 2 wenn entweder in Formel (I) X = H ist oder in Formel (II) R², R⁴ oder R¹, R⁴ oder R¹, R² gleich oder verschieden sind und mindestens ein Vertreter aus der Gruppe CO₂H, R⁶-CO₂H; oder R² gleich R⁴ sind und mindestens ein Vertreter aus der Gruppe -CO-O-CO-, -CO-S-CO-, -O-NR¹-CO-, -CO-PR¹-CO-; oder R¹, R² gleich sind und mindestens ein Vertreter aus der Gruppe -CR₂³-CO-O-CO-, -CR₂³-CO-NR¹-CO-,-CR₂³-CO-O-CO-CR₂³, -CR₂³-CO-NR¹-CO-CR₂³;
R¹, R³ oder R², R³ oder R³, R⁴ gleich oder verschieden sind und mindestens ein Vertreter aus der Gruppe H, R⁵;
R⁵ C₁-C₁₈-Alkyl, C₆-C₁₈-Aryl, C₆-C₁₈-Arylalkyl, C₆-C₁₈-Alkylaryl;
R⁶ C₂-C₁₈-Alkylen, C₆-C₁₈-Arylen, C₆-C₁₈-Alkarylen und/oder C₆-C₁₈-Aralkylen bedeuten.

Erfindungsgemäß bevorzugt werden in Schritt c) des Verfahrens 2 so Addukte aus Alkylphosphonigsäurederivaten (I) und diesterbildendem Olefinteil, die am Alkylphosphonigsäureteil eine unveresterte Phosphinsäurefunktion tragen, durch Umsetzung mit einem Esterbildner verestert.

Erfindungsgemäß bevorzugt werden in Schritt c) des Verfahrens 2 so Addukte aus Alkylphosphonigsäurederivaten (I) und diesterbildenden Olefinteil, die am diesterbildenden Olefinteil eine unveresterte Carbonsäurefunktion tragen, durch Umsetzung mit einem Esterbildner verestert.

Erfindungsgemäß bevorzugt werden in Schritt c) des Verfahrens 2 so Addukte aus Alkylphosphonigsäurederivaten (I) und diesterbildenden Olefinteil, die am Alkylphosphonigsäureteil eine Esterfunktion tragen, durch Umsetzung mit einem Esterbildner umgeestert.

Erfindungsgemäß bevorzugt werden in Schritt c) des Verfahrens 2 so Addukte aus Alkylphosphonigsäurederivaten (I) und diesterbildenden Olefinteil, die am Carbonsäureteil eine Esterfunktion tragen, durch Umsetzung mit einem Esterbildner umgeestert.

Erfindungsgemäß geeignete Esterbildner sind C₁-C₂₀-gesättigte und ungesättigte ein-, zwei-, drei- und vierwertige Alkohole, besonders bevorzugt C₁-C₈-gesättigte und ungesättigte ein-, zwei-, drei- und vierwertige Alkohole, ganz besonders bevorzugt Methanol, Ethanol, Propanol, Butanol, Amylalkohol, Octanol, Ethylenglycol, Polyethylenglycol, 1,2-Propandiol, 1,3-Propandiol, Butandiol, Glycerin, Erythrit, Pentaerythrit, Allylalkohol, 3-Buten-1-ol, 3-Hydroxy-1-buten, 3-Buten-2-ol, Methylvinyl-carbinol, 2-Methyl-2-Propen-1-ol, Methallylalcohol, 2-Buten-1-ol, Crotylalkohol, 1-Pen-ten-3-ol, trans -2-Penten-1-ol, cis -2-Penten-1-ol, 3-Penten-2-ol, 4-Penten-1-ol, 4-Pen-ten-2-ol, 1-Hexen-3-ol, cis-2-Hexen-1-ol, trans-2-Hexen-1-ol, cis-3-Hexen-1-ol, trans-3-Hexen-1-ol, 4-Hexen-1-ol, 5-Hexen-1-ol, 5-Hexen-2-ol, , 1-Hepten-3-ol, 1-Octen-3-ol, trans-2-Octen-1-ol, Oleylalkohol, Terpenalkohol, Propargylalkohol, 2-Butin-1,4-diol.

Bevorzugt ist die Verwendung der erfindungsgemäßen Addukte von Alkylphosphonig-säurederivaten und Diesterbildenden Olefinen, zur Herstellung von Säuren durch Verseifung in Schritt c) des Verfahrens 3 wenn entweder in Formel I X H, C₁-C₁₈-Alkyl, C₆-C₁₈-Aryl, C₆-C₁₈-Arylalkyl, C₆-C₁₈-Alkylaryl, C₂-C₁₈-Alkylen oder in Formel (II)
R², R⁴ oder R¹, R⁴ oder R¹, R² gleich oder verschieden sind und mindestens ein Vertreter aus der Gruppe CO₂H, R⁶-CO₂H; oder R² gleich R⁴ sind und mindestens ein Vertreter aus der Gruppe -CO-O-CO-, -CO-S-CO-, -O-NR¹-CO-, -CO-PR¹-CO-; oder R¹, R² gleich sind und mindestens ein Vertreter aus der Gruppe -CR₂³-CO-O-CO-, -CR₂³-CO-NR¹-CO-,-CR₂³-CO-O-CO-CR₂³, -CR₂³-CO-NR¹-CO-CR₂³; R¹, R³ oder R², R³ oder R³, R⁴ gleich oder verschieden sind und mindestens ein Vertreter aus der Gruppe H, R⁵ ; R⁵ C₁-C₁₈-Alkyl, C₆-C₁₈-Aryl, C₆-C₁₈-Arylalkyl, C₆-C₁₈-Alkylaryl; R⁶ C₂-C₁₈-Alkylen, C₆-C₁₈-Arylen, C₆-C₁₈-Alkarylen und/oder C₆-C₁₈-Aralkylen bedeuten.

Erfindungsgemäß bevorzugt werden in Schritt c) des Verfahrens 3 so Addukte aus Alkylphosphonigsäurederivaten (I) und diesterbildenden Olefinteil, die am Alkylphosphonigsäureteil eine Esterfunktion tragen, durch Umsetzung mit Katalysator C zur Phosphinsäurefunktion verseift.

Erfindungsgemäß bevorzugt werden in Schritt c) des Verfahrens 3 so Addukte aus Alkylphosphonigsäurederivaten (I) und diesterbildenden Olefinteil, die am Carbonsäureteil eine Esterfunktion tragen, durch Umsetzung mit Katalysator C zur Carbonsäurefunktion verseift.

Erfindungsgemäß bevorzugt werden in Schritt c) des Verfahrens 3 so Addukte aus Alkylphosphonigsäurederivaten (I) und diesterbildenden Olefinteil, die am Carbonsäureteil mindestens eine Nitrilfunktion tragen, durch Umsetzung mit Katalysator C zur Carbonsäurefunktion verseift.

Erfindungsgemäß bevorzugte Katalysatoren C sind Brönsted-Säuren, Brönsted-Basen, Wasser, bevorzugt Mineralsäuren wie beispielsweise Salzsäure, Schwefelsäure, Salpetersäure, Phosphorsäure, Sulfonsäuren, Alkalihydroxide oder Erdalkalihydroxide.

Geignete Basen sindMetalle, Metallhydride und Metallalkoholate wie zum Beispiel Lithium, Lithiumhydrid, Lithiumaluminiumhydrid, Methyllithium, Butyllithium, t-Butyllithium, Lithiumdiisopropylamid, Natrium, Natriumhydrid, Natriumborhydrid, Natriummethanolat, Natriumethanolat oder Natriumbutylat, Kaliummethanolat, Kaliumethanolat oder Kaliumbutylat und zudem Natriumhydroxid, Kaliumhydroxid, Lithiumhydroxid und Bariumhydroxid.

Ganz besonders bevorzugt sind Schwefel-, Salz- Phosphor-, Toluolsulfonsäure; Natron-, Kali-, Kalklauge.

Wird ein Salz eines Adduktes einer Alkylphosphonigsäure (I) und einem diesterbildenden Olefin (II) erhalten, kann dieses mit einer Mineralsäure zur entsprechenden Säure umgesetzt und analog Schritt b) verestert werden.

Wird ein Ammoniumalz eines Adduktes einer Alkylphosphonigsäure und einem diesterbildenden Olefin erhalten, kann dieses zunächst mit einer Base zu einem Salz eines Adduktes einer Alkylphosphonigsäure und einem diesterbildenden Olefin umgesetzt werden, welches dann mit einer Mineralsäure zur entsprechenden Säure umgesetzt und analog Schritt b) verestert werden.

Bevorzugt kann die saure oder alkalische Hydrolyse in Gegenwart von Wasser und eines inerten Lösungsmittles erfolgen. Geeignete inerte Lösungsmittel sind die in Verfahrensschritt a) genannten Lösungsmittel, bevorzugt sind niedermolekulare Alkohole mit 1 bis 6 Kohlenstoffatomen.

Bei der Durchführung der Hydrolyse ist die Gegenwart von Wasser wesentlich. Die Wassermenge kann von dem stöchiometrischen Bedarf als Mindestmenge bis zu einem Überschuss reichen.

Vorzugsweise erfolgt die Hydrolyse in einem Phosphor/Wasser-Molverhältnis von 1:1 bis 1:1.000, besonders bevorzugt von 1:1 bis 1:10.

Vorzugsweise erfolgt die Hydrolyse in einem Phosphor/Base bzw. Säure-Molverhältnis von 1:1 bis 1:300, besonders bevorzugt von 1,1 bis 1:20.

Die verwendete Lösungsmittelmenge beträgt 0,5 kg bis 1,5 kg pro kg der Addukte von Alkylphosphonigsäurederivat (I)und diesterbildendem Olefin (II), bevorzugt von 0,6 kg bis 1,0 kg.

Die Reaktionstemperatur beträgt bevorzugt 50 °C bis 140 °C, bevorzugt von 80 °C bis 130 °C.

Bevorzugt erfolgt die Umsetzung bei einem Gesamtdruck von 1 bis 100 bar, besonders bevorzugt bei einem Gesamtdruck von 1 bis 10 bar.

Die Reaktionszeit beträgt 0,2 bis 20 Stunden, bevorzugt 1 bis 12 Stunden.

Die Addukte von Alkylphosphonigsäurederivat (I) und diesterbildendem Olefin (II) kann im Folgenden zu weiteren Metallsalzen umgesetzt werden.

Bevorzugt handelt es sich bei den eingesetzten Metallverbindungen um Verbindungen der Metalle Mg, Ca, Al, Sb, Sn, Ge, Ti, Fe, Zr, Zn, Ce, Bi, Sr, Mn, Li, Na, K, besonders bevorzugt Mg, Ca, Al, Ti, Zn, Sn, Ce, Fe.

Als Lösungsmittel geeignet sind die in Verfahrensstufe a) eingesetzten.

Bevorzugt erfolgt die Umsetzung in wässrigem Medium.

Bevorzugt ist die Umsetzung in einem modifizierten Lösungsmittelsystem. Hierfür werden acide Komponenten, Lösevermittler, Schauminhibitoren etc. zugegeben.

Bevorzugt setzt man die Addukte von Alkylphosphonigsäurederivat (I) und diesterbildendem Olefin (II), deren Säuren, Ester und/oder Alkalisalze mit Metallverbindungen von Mg, Ca, Al, Zn, Ti, Sn, Zr, Ce oder Fe zu den Addukten von Alkylphosphonigsäure und diesterbildendem Olefin (II) dieser Metalle um.

Die Umsetzung erfolgt dabei in einem Molverhältnis der Addukte von Alkylphosphonig-säurederivat (I) und diesterbildendem Olefin (II) zu Metall von 8 zu 1 bis 1 zu 3 (für vierwertige Metallionen oder Metalle mit stabiler vierwertiger Oxidationsstufe), von 6 zu 1 bis 1 zu 3 (für dreiwertige Metallionen oder Metalle mit stabiler dreiwertiger Oxidationsstufe), von 4 zu 1 bis 1 zu 3 (für zweiwertige Metallionen oder Metalle mit stabiler zweiwertiger Oxidationsstufe) und von 3 zu 1 bis 1 zu 4 (für einwertige Metallionen oder Metalle mit stabiler einwertiger Oxidationsstufe).

Bevorzugt führt man die Ester und/oder Alkalisalze der Addukte von Alkylphosphonig-säure und diesterbildendem Olefin(II) in die entsprechende Säure über und setzt diese mit Metallverbindungen von Mg, Ca, Al, Zn, Ti, Sn, Zr, Ce oder Fe zu den Addukten von Alkylphosphonigsäure und diesterbildendem Olefin dieser Metalle um.

Bevorzugt wandelt man die Säuren und Ester der Addukte von Alkylphosphonigsäure und diesterbildendem Olefin (II) in ein Alkalisalz um und setzt dieses mit Metallverbindungen von Mg, Ca, Al, Zn, Ti, Sn, Zr, Ce oder Fe zu den Addukten von Alkylphosphonigsäure und diesterbildendem Olefin (II) dieser Metalle um.

Bevorzugt handelt es sich bei den Metallverbindungen von Mg, Ca, Al, Zn, Ti, Sn, Zr, Ce oder Fe für Verfahrenstufe c) um Metalle, Metalloxide, -hydroxide, -oxidhydroxide, -borate, -carbonate, -hydroxocarbonate, -hydroxocarbonathydrate, gemischte -hydroxocarbonate, gemischte -hydroxocarbonathydrate, -phosphate, -sulfate, -sulfat-hydrate, -hydroxosulfathydrate, gemischte -hydroxosulfathydrate, -oxysulfate, -acetate, -nitrate, fluoride, -fluoridhydrate, -chloride, chloridhydrate, -oxychloride, -bromide, -iodide, -iodid hydrate, -carbonsäurederivate und/oder -alkoxide.

Bevorzugt handelt es sich bei den Metallverbindungen um Aluminiumchlorid, Aluminiumhydroxid, Aluminiumnitrat, Aluminiumsulfat, Titanylsulfat, Zinknitrat, Zinkoxid, Zinkhydroxid und/oder Zinksulfat.

Geeignet sind auch metallisches Aluminium, -fluorid, -hydroxychlorid, -bromid, -iodid, -sulfid, -selenid; -phosphid, -hypophosphit,-antimonid, -nitrid; -carbid, -hexafluorosilicat; -hydrid, -calciumhydrid, -borhydrid; -chlorat; Natrium-Aluminiumsulfat, Aluminium-Kaliumsulfat, Aluminiumammoniumsulfat, -nitrat, -metaphosphat, -phosphat, -silicat, -magnesiumsilicat, -carbonat, -hydrotalcit, -natriumcarbonat, -borat; -thiocyanat; -oxid, -oxidhydroxid, ihre entsprechenden Hydrate und/oder Polyaluminiumhydroxyverbindungen, die vorzugsweise einen Aluminiumgehalt von 9 bis 40 Gew.-% besitzen.

Geeignet sind auch Aluminiumsalze von Mono-, Di-, Oligo-, Polycarbonsäuren wie z. B. Aluminiumdiacetat, -acetotartrat, -formiat, -lactat, -oxalat, -tartrat, -oleat, -palmitat, -sterarat, -trifluoromethansulfonat, -benzoat,-salicylat, -8-oxychinolat.

Geeignet sind ebenfalls elementares, metallisches Zink sowie Zinksalze wie z. B. Zinkhalogenide (Zinkfluorid, Zinkchloride, Zinkbromid, Zinkiodid).

Geeignet ist auchZinkborat, -carbonat,-hydroxidcarbonat, -silicat, -hexafluorosilicat, -stannat, -hydroxidstannat, -Magnesium-Aluminium-Hydroxidcarbonat; -nitrat, -nitrit, -phosphat, -pyrophosphat; -sulfat, -phosphid, -selenid, -tellurid und Zinksalze der Oxosäuren der siebten Hauptgruppe (Hypohalogenite, Halogenite, Halogenate, z. B. Zinkiodat, Perhalogenate, z. B. Zinkperchlorat); Zinksalze der Pseudohalogenide (Zinkthiocyanat, -cyanat, -cyanid); Zinkoxide, -peroxide, -hydroxide oder gemischte Zinkoxidhydroxide.

Bevorzugt sind Zinksalze der Oxosäuren der Übergangsmetalle (bspw. Zinkchromat(VI)hydroxyd, -chromit, -molybdat, -permanganat, -molybdat).

Geeignet sind auch Zinksalze von Mono-, Di-, Oligo-, Polycarbonsäuren, wie z. B. Zinkformiat, -acetat, -trifluoracetat, -propionat, -butyrat, -valerat, -caprylat, -oleat, -stearat, -oxalat, -tartrat, -citrat, -benzoat, -salicylat, -lactat, -acrylat, -maleat, -succinat, Salze von Aminosäuren (Glyzin), von sauren Hydroxyfunktionen (Zinkphenolat etc.), Zink-p-phenolsulfonat, -acetylacetonat, -stannat, -dimethyldithiocarbamat, -trifluormethansulfonat.

Bei den Titan-Verbindungen ist metallisches Titan ebenso wie Titan(III) und/oder (IV)-chlorid, -nitrat, -sulfat, -formiat, -acetat, -bromid, -fluorid, -oxychlorid, -oxysulfat, -oxid, -n-propoxid, -n-butoxid, -isopropoxid, -ethoxid, -2-ethylhexyloxid geeignet.

Geeignet ist auch metallisches Zinn sowie Zinnsalze (Zinn(II) und /oder (IV) -chlorid); Zinnoxide und Zinn-Alkoxid wie z. B. Zinn-(IV)-tert-butoxid.

Geeignet sind auch Cer(III)fluorid, -chlorid, -nitrat.

Bei den Zirkonium-Verbindungen ist metallisches Zirkonium sowie Zirkoniumsalze wie Zirkoniumchlorid, -sulfat, Zirconylacetat, Zirconylchlorid bevorzugt. Weiterhin bevorzugt sind Zirkonoxide sowie Zirkon-(IV)-tert-butoxid.

Bevorzugt erfolgt die Umsetzung bei einem Feststoffgehalt der Salze von Addukten von Alkylphosphonigsäurederivate und diesterbildendem Olefin von 0,1 bis 70 Gew.-%, bevorzugt 5 bis 40 Gew.-%.

Bevorzugt erfolgt die Umsetzung bei einer Temperatur von 20 bis 250 °C, bevorzugt bei einer Temperatur von 80 bis 120 °C.

Die Umsetzungerfolgt bei einem Druck von 0,01 und 1.000 bar, bevorzugt 0,1 bis 100 bar.

Bevorzugt erfolgt die Umsetzung während einer Reaktionszeit von 1*10⁻⁷ bis 1*10² h.

Bevorzugt weist das Addukt von Alkylphosphonigsäurederivaten und diesterbildendem Olefin der Metalle Mg, Ca, Al, Zn, Ti, Sn, Zr, Ce oder Fe wahlweise
eine Restfeuchte von 0,01 bis 10 Gew.-%, bevorzugt von 0,1 bis 1 Gew.-%,
eine mittlere Teilchengröße von 0,1 bis 2000 µm, bevorzugt von 10 bis 500 µm,
eine Schüttdichte von 80 bis 800 g/l, bevorzugt von 200 bis 700 g/l,
eine Rieselfähigkeit nach Pfrengle von 0,5 bis 10, bevorzugt von 1 bis 5, auf.

Bevorzugt ist die Verwendung der erfindungsgemäßen Addukte von Alkylphosphonigsäurederivaten und diesterbildenden Olefinen als Flammschutzmittel.

Die erfindungsgemäßen Addukte aus Alkylphosphonigsäurederivaten und diesterbildenden Olefinen können über ihre funktionellen Gruppen als copolymere Komponente in thermoplastische Polymere wie z. B. Polyester eingebaut werden. Im Copolymerisationsprozess wird der Gehalt an Addukt angepasst um im flammhemmend ausgerüsteten Polymer den gewünschten Flammschutz zu erzeugen. Gegenüber üblichen Flammschutzmitteln mit Füllstoff- oder Additivcharakter sind die Vorteile: Homogene Verteilung, permanente Verankerung im Polymer (kein Ausbluten oder Ausdampfen) und verbesserte mechanische Zähigkeits- und Festigkeitseigenschaften.
Derartige flammgeschützte Copolymerisate können auch in Polymere eincompoundiert werden. Es entstehen so Blends, die gegenüber üblichen Flammschutzmitteln mit Füllstoff- oder Additivcharakter ebenfalls günstigere Eigenschaften aufweisen.

Die erfindungsgemäßen Addukte von Alkylphosphonigsäurederivaten und diesterbildenden Olefinen können ggf. auch, wie in EP-A-1693403 beschrieben, eingelagert werden: Die dortige flammgeschützte thermoplastische Formmasse umfasst Addukte von Alkylphosphonigsäurederivaten und diesterbildenden Olefinen als Struktureinheit im Polymerrückgrad. Die erfindungsgemäßen Addukte sind dann durch Bildung von chemischen Bindungen in das Polymermaktromolekül einreagiert. Dies kann durch Einbau beim Polymerisiern der Monomere geschehen oder durch nachträglichen Einbau durch Aufbrechen der Maktromolekülkette und Einbau der erfindungsgemäßen Addukte.

Die erfindungsgemäßen Addukte von Alkylphosphonigsäurederivaten und diesterbildenden Olefinen als Struktureinheit im Polymerrückgrad können zufällig auf das Macromolekül verteilt sein. Dementsprechend können sie auch gelegentlich als Endgruppen auftreten (wie z. B. in US-A-3941752 beschrieben).

Grundsätzlich kann jede mögliche Methode, die erfindungsgemäßen Addukte in ein Polymer einzureagieren, benutzt werden. Zum Beispiel kann thermoplastisches Polymer mit erfindungsgemäßen Addukten gemischt werden.

Die erfindungsgemäßen Addukte von Alkylphosphonigsäurederivaten und diessterbildenden Olefinen können auch als Struktureinheit im Polymerrückgrad von Polyamiden eingesetzt werden. Typischerweise enthält ein solchermaßen flammgeschütztes Polyamid zwischen 0,05 und 5,0 Gew.-% Phosphor, bevorzugt zwischen 0,4 und 2,0 Gew.-%.

Bevorzugt ist die Verwendung der erfindungsgemäßen Addukte von Alkylphosphonigsäurederivaten und diesterbildenden Olefinen zur Herstellung von flammgeschützten thermoplastischen Polymerformmassen.

Bevorzugt enthält die flammgeschützte thermoplastische Polymerformmasse 0,5 bis 45 Gew.-% erfindungsgemäße Addukte von Alkylphosphonigsäurederivaten und diesterbildenden Olefinen, 0,5 bis 95 Gew.-% thermoplastisches Polymer oder Mischungen derselben, wobei die Summe der Komponenten 100 Gew.-% beträgt.

Bevorzugt enthält die flammgeschützte thermoplastische Polymerformmasse 0,5 bis 40 Gew.-% erfindungsgemäße Addukte von Alkylphosphonigsäurederivaten und diesterbildenden Olefinen, 10 bis 85,5 Gew.-% thermoplastisches Polymer oder Mischungen derselben, 2 bis 40 Gew.-% Additive, 2 bis 40 Gew.-% Füllstoff bzw. Verstärkungsmaterialien, wobei die Summe der Komponenten 100 Gew.-% beträgt.

Bevorzugt handelt es sich bei den Additiven um Antioxidantien, Antistatica, Treibmittel, weitere Flammschutzmittel, Hitzestabilisatoren, Schlagzähmodifikatoren, Prozesshilfsmittel, Gleitmittel, Lichtschutzmittel, Antidrippingmittel, Compatibilizer, Verstärkungsstoffe, Füllstoffe, Keimbildungsmittel, Nukleierungsmittel, Additive zur Lasermarkierung, Hydrolysestabilisatoren, Kettenverlängerer, Farbpigmente, Weichmacher und/oder Plastifizierungsmittel.

Bevorzugte Additive sind auch Aluminiumtrihydrat, Antimonoxid, bromierte aromatische oder cycloaliphatische Kohlenwasserstoffe, Phenole, Ether, Chlorparaffin, Hexachloro-cyclopentadien-Addukte, Roter Phosphor, Melaminderivate, Melamincyanurate, Ammoniumpolyphosphate und Magnesiumhydroxid.; zudem weitere Flammschutzmittel, insbesondere Salze von Dialkylphosphinsäuren.

Bevorzugt handelt es sich bei dem Polymer um ein thermoplastisches oder duroplastisches Polymer.

Bevorzugt handelt es sich bei den thermoplastischen Polymeren um Polymere von Mono- und Diolefinen, beispielsweise Polypropylen, Polyisobutylen, Polybuten-1, Poly-4-methylpenten-1, Polyisopren oder Polybutadien sowie Polymerisate von Cyciooiefinen wie z. B. von Cyciopenten oder Norbornen; ferner Polyethylen (das ggf. vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den thermoplastischen Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z.B. Klebrigmacherharze) und Mischungen von Polyalkylenen und Stärke.

Bevorzugt handelt es sich bei den thermoplastischen Polymeren um Polystyrol, Poly-(p-methylstyrol) und/oder Poly-(alpha-methylstyrol).

Bevorzugt handelt es sich bei den thermoplastischen Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den thermoplastischen Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymeren, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS- (Acrylonitril-Butadien-Styrol), MBS-(Methylmethacrylat-Butadien-Styrol), ASA- (Acrylonitril-Styrol-Acrylat) oder AES-(Acrylonitril-Ethylen-Styrol)Polymere bekannt sind.

Bevorzugt handelt es sich bei den thermoplastischen Polymeren um halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den thermoplastischen Polymeren um Polymere, die sich von alpha-, beta -ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den thermoplastischen Polymeren um solche, die sich von ungesättigten Alkoholen und Aminen bzw. deren Acetalen oder Acylderivaten ableiten, wie Polyvinylalkohol, Polyvinylacetat, -stearat, -benzoat, -maleat, Polyvinyl-butyral, Polyallylphthalat, Polyallylmelamin; sowie deren Copolymere mit Olefinen.

Bevorzugt handelt es sich bei den thermoplastischen Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um thermoplastischen Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den thermoplastischen Polymeren um Polyphenylenoxide und -sulfide und deren Mischungen mit Styrolpolymeren oder Polyamiden.

Bevorzugt handelt es sich bei den thermoplastischen Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den thermoplastischen Polymeren um Polyamide und Copolyamide, die sich von Diaminen und Dicarbonsäuren und/oder von Aminocarbonsäuren oder den entsprechenden Lactamen ableiten, wie Polyamid 4, Polyamid 6 (Akulon^{®} K122, DSM; Zytel^{®} 7301, Fa. DuPont; Durethan^{®} B 29, Fa. Bayer), Polyamid 6/6 (Zytel^{®} 101, Fa. DuPont; Durethan^{®} A30, Durethan^{®} AKV, Durethan^{®} AM, Fa. Bayer; Ultramid^{®} A3, Fa BASF) 6/10, 6/9, 6/12, 4/6, 12/12, Polyamid 11, Polyamid 12 (Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylenterephthalamid oder Poly-m-phenylenisophthalamid; Blockcopolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den thermoplastischen Polymeren um Polyester, die sich von Dicarbonsäuren und Dialkoholen und/oder von Hydroxycarbonsäuren oder den entsprechenden Lactonen ableiten, wie Polyethylenterephthalat, Polybutylen-terephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den thermoplastischen Polymeren um Polycarbonate, Polyestercarbonate, auch um Polysulfone, Polyethersulfone und Polyetherketone.

Bevorzugt handelt es sich bei den Polymeren um Mischungen (Polyblends) der vorgenannten Polymeren, wie z.B. PP/EPDM (Polypropylen/ Ethylen-Propylen-Dien-Kautschuk), Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC, wobei PP Polypropylen, EPDM (Ethylen-Propylen-Dien-Kautschuk), ABS Acrylonitril-Butadien-Styrol, PVC Polyvinylchlorid, EVA Ethylen-Vinylacetat, MBS Methylmethacrylat-Butadien-Styrol, PC Polycarbonat, PBTP Polybutylenterephthalat, CPE Chloriertes Polyethylen, POM Polyoxymethylen, PPO Polyphenylenoxid, PUR Polyurethan, PC Polycarbonat, HIPS High-Impact-Polystyrol, PA Polyamid, HDPE High-Density-Polyethylen, PBT Polybutylenterephthalat, PET Polyethylenterephthalat bedeuten.

Bevorzugt ist die Verwendung der erfindungsgemäßen Addukte von Alkylphosphonigsäurederivaten und diesterbildenden Olefinen zur Herstellung von flammgeschützten Polymer-Formkörpern, -Filmen, -Fäden und -Fasern.

Bevorzugt enthalten die flammgeschützten Polymer-Formkörper, -Filme, -Fäden und -Fasern 0,5 bis 45 Gew.-% erfindungsgemäße Addukte von Alkylphosphonigsäurederivaten und diesterbildenden Olefinen, 0,5 bis 98 Gew.-% thermoplastisches Polymer oder Mischungen derselben, 0,5 bis 55 Gew.-% Additive und 0,5 bis 55 Gew.-% Füllstoff bzw. Verstärkungsmaterialien.

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z. B. Spritzgießmaschine (Typ Aarburg Allrounder) und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

Erfindungsgemäße Addukte von Alkylphosphonigsäurederivaten und diesterbildenden Olefinen - können über die funktionelle Gruppe als copolymere Komponente in duro-plastische Polymere wie z. B. ungesättigte Polyester oder Epoxide eingebaut werden.

Bevorzugt handelt es sich bei den duroplastischen Polymeren um ungesättigte Polyesterharze (UP-Harze), die sich von Copolyestern gesättigter und ungesättigter Dicarbonsäuren oder deren Anhydriden mit mehrwertigen Alkoholen, sowie Vinylverbindungen als Vernetzungsmittel ableiten. UP-Harze werden gehärtet durch radikalische Polymerisation mit Initiatoren (z. B. Peroxiden) und Beschleunigern.

Bevorzugte ungesättigte Dicarbonsäuren und -derivate zur Herstellung der Polyesterharze sind Maleinsäureanhydrid und Fumarsäure.

Bevorzugte gesättigte Dicarbonsäuren sind Phthalsäure, Isophthalsäure, Terephthalsäure, Tetrahydrophthalsäure, Adipinsäure.

Bevorzugte Diole sind 1,2 Propandiol, Ethylenglycol, Diethylenglycol und Neopentylglycol, Neopentylglycol, ethoxyliertes oder propoxyliertes Bisphenol A.

Bevorzugte Vinylverbindung zur Vernetzung ist Styrol.

Bevorzugte Härtersysteme sind Peroxide und Metallcoinitiatoren z. B. Hydroperoxide und Cobaltoctanoat und/oder Benzoylperoxid und aromatische Amine und/oder UV-Licht und Photosensibilisatoren, z. B. Benzoinether.

Bevorzugte Hydroperoxide sind Di-tert.-butylperoxid, tert.-Butylperoctoat, tert.-Butylperpivalat, tert.-Butylper-2-ethylhexanoat, tert.-Butylpermaleinat, tert.-Butylperisobutyrat, Benzoyiperoxid, Diacetylperoxid, Succinylperoxid, p-Chlorbenzoylperoxid, Dicyclohexylperoxiddicarbonat.

Bevorzugt werden Initiatoren in Mengen von 0,1 bis 20 Gew. -%, vorzugsweise 0,2 bis 15 Gew.-%, berechnet auf die Masse aller Comonomeren, eingesetzt.

Bevorzugte Metallcoinitiatoren sind Kobalt-, Mangan-, Eisen-, Vanadium-, Nickel-oder Bleiverbindungen. Bevorzugt werden Metallcoinitiatoren in Mengen von 0,05 bis 1 Gew.-%, berechnet auf die Masse aller Comonomeren, eingesetzt.

Bevorzugte aromatische Amine sind Dimethylanilin, Dimethyl-p-toluol, Diethylanilin und Phenyldiethanolamine.

Ein Verfahren zur Herstellung von flammgeschützten Copolymerisaten ist dadurch gekennzeichnet, dass man mindestens ein ethylenisch ungesättigtes Dicarbonsäure-anhydrid, abgeleitet von mindestens einer C₄-C₈-Dicarbonsäure, mindestens eine vinylaromatische Verbindung und ein Polyol copolymerisiert und mit erfindungs-gemäßen Addukten von Alkylphosphonigsäurederivaten und diesterbildenden Olefinen umsetzt.

Ein Verfahren zur Herstellung von flammwidrigen duroplastischen Massen ist dadurch gekennzeichnet, dass man ein duroplastisches Harz mit einer Flammschutzkomponente aus erfindungsgemäßen Addukten von Alkylphosphonigsäurederivaten und diesterbildenden Olefinen vermischt und die resultierende Mischung bei Drücken von 3 bis 10 bar und Temperaturen von 20 bis 60 °C nass presst (Kaltpressung).

Ein weiteres Verfahren zur Herstellung von flammwidrigen duroplastischen Massen ist dadurch gekennzeichnet, dass man ein duroplastisches Harz mit erfindungsgemäßen Addukten von Alkylphosphonigsäurederivaten und diesterbildenden Olefinen vermischt und die resultierende Mischung bei Drücken von 3 bis 10 bar und Temperaturen von 80 bis 150 °C nass presst (Warm- oder Heisspressung).

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. von Bisphenol-A-diglycidylethern, Bisphenol-F-di-glycidylethern, die mittels üblichen Härtern und/oder Beschleunigern vernetzt werden.

Geeignete Glycidylverbindungen sind Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen.

Geeignete Härter sind Polyamine wie Diethylenetriamin Triethylentetramin, Aminoethylpiperazin, Isophorondiamin, Polyamidoamin, Diaminodiphenylmethan, Diaminodiphenolsulfone und Dicyandiamid, ebenso mehrbasige Säuren oder deren Anhydride wie z. B. Phthalsäureanhydrid, Maleinsäureanhydrid, Tetrahydrophthalsäureanhydrid, Methyltetrahydrophthalsäureanhydrid, Hexahydrophthalsäure-anhydrid und Methylhexahydrophthalsäureanhydrid sowie Phenole wie z. B. Phenol-Novolak-Harz, Cresol-Novolak-Harz, Dicyclopentadien-Phenol-Addukt-Harz, Phenolaralkyl-Harz, Cresolaralkyl-Harz, Naphtholaralkyl Harz, Biphenol-modifiziertes Phenolaralkyl-Harz, Phenoltrimethylolmethan-Harz, Tetraphenylolethan-Harz, Naphthol-Novolak-Harz, Naphthol-Phenol-Kocondensat-Harz, Naphthol-Cresol-Kocondensat-Harz, Biphenol- modifiziertes Phenol-Harz und Aminotriazin-modifiziertes Phenol-Harz. Alle Härter können alleine oder in Kombination miteinander eingesetzt werden.

Geeignete Katalysatoren bzw. Beschleuniger für die Vernetzung bei der Polymerisation sind tertiäre Amine, Benzyldimethylamin, N-Alkylpyridine, Imidazol, 1-Methylimidazol, 2-Methylimidazol, 2-Ethyl-4-methylimidazol, 2-Ethyl-4-methylimidazol, 2-Phenylimidazol, 2-Heptadecylimidazol, Metallsalze organischer Säuren, Lewis Säuren und Amin-Komplex-Salze.

Epoxidharze sind geeignet zum Verguss von elektrischen bzw. elektronischen Bauteilen und für Tränk- und Imprägnierprozesse. In der Elektrotechnik werden Epoxidharze überwiegend flammwidrig ausgerüstet und für Leiterplatten und Isolatoren eingesetzt.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze. Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Die Erfindung betrifft auch eine flammgeschützte Polyurethan-Formmasse, hergestellt durch Reaktion von 0,1 bis 50 Gew.-Teilen erfindungsgemäßer Addukte von Alkylphosphonigsäurederivaten und diesterbildenden Olefinen mit 30 bis 65 Gew.-Teilen Polyisocyanat und 30 bis 65 Gew.-Teilen Polyol.

Das Verfahren zur Herstellung einer flammgeschützten Polyurethan-Formmasse ist dadurch gekennzeichnet, dass 170 bis 70 Gewichtsteile, bevorzugt 130 bis 80 Gew.-Teile, Polyisocyanate mit 100 Gew.-Teilen Polyol, 0,1 bis 50 Gew.-Teilen erfindungsgemäßer Addukte von Alkylphosphonigsäurederivaten und diesterbildenden Olefinen - und 0,1 bis 4 Gew.-Teilen, besonders bevorzugt 1 bis 2 Gew.-Teile, Katalysator zur Reaktion gebracht werden und wahlweise mit 0,1 bis 1,8 Gew.-Teilen, vorzugsweise 0,3 bis 1,6 Gew.-Teilen Treibmittel aufgeschäumt werden.

Bevorzugte Polyole, sind Alkenoxidaddukte von Ethylenglykol, 1,2-Propandiol, Bisphenol A, Trimethylolpropan, Glycerin, Pentaerythrol, Sorbit, Zucker, abgebaute Stärke, Ethylendiamin, Diaminotoluol und/oder Anilin, die als Initiator dienen. Die bevorzugten Oxyalkylierungsmittel enthalten bevorzugt 2 bis 4 Kohlenstoffatome, besonders bevorzugt sind es Ethylenoxid und Propylenoxid.

Bevorzugte Polyester-Polyole werden durch Polykondensation eines Polyalkoholes wie Ethylenglykol, Diethylenglykol, Propylenglykol, 1,4-Butandiol, 1,5-Pentandiol, Methylpentandiol, 1,6-Hexandiol, Trimethylolpropan, Glycerin, Pentaerythritol, Diglycerol, Traubenzucker und/oder Sorbit mit einer dibasischen Säure wie Oxalsäure, Malonsäure, Bernsteinsäure, Weinsäure, Adipinsäure, Sebacinsäure, Maleinsäure, Fumarsäure, Phthalsäure und/oder Terephthalsäure erhalten. Diese Polyester-Polyole können alleine oder in Kombination benutzt werden.

Geeignete Polyisocyanate sind aromatische, alicyclische or aliphatische Polyisocyanate, mit nicht weniger als zwei Isocyanat-Groupen und Mischungen davon. Bevorzugt sind aromatische Polyisocyanate wie Tolyldiisocyanat, Methylendiphenyldiisocyanat, Naphthylendiisocyanate, Xylylendiisocyanat, Tris-4-isocyanatophenyl)methan und Polymethylenpolyphenylendüsocyanate; alicyclische Polyisocyanate wie Methylendiphenyldiisocyanat, Tolyldiisocyanat; aliphatische Polyisocyanate und Hexamethylendiisocyanat, Isophorendiisocyanat, Demeryldiisocyanat, 1,1-Methylenbis(4-isocyanatocyclohexan-4,4'-Diisocyanatodicyclohexylmethan-Isomerengemisch, 1,4-Cyclohexyldiisocyanat, Desmodur^{®} -Typen (Bayer) und Lysindiisocyanat und Mischungen davon. Geeignete Polyisocyanate sind modifizierte Produkte, die durch Reaktion von Polyisocyanat mit Polyol, Harnstoff, Carbodiimid und/oder Biuret erhalten werden.

Geeignete Katalysatoren zur Herstellung von Polyurethan sind starke Basen, Alkalimetalsalze von Carbonsäuren oder aliphatische tertiäre Amine. Bevorzugt sind quaternäres Ammoniumhydroxid, Alkalimetallhydroxid oder Alkoxid, Natrium-oder Kaliumacetat, Kaliumoctoat, Natriumbenzoat, 1,4-diazabicyclo[2.2.2]octan, N,N,N',N'-Tetramethylhexamethylen-diamin, N,N,N',N'-Tetramethylpropylendiamin, N,N,N',N',N"-Pentamethyldiethylen-triamin, N,N'-Di-(C₁-C₂)-alkylpiperazin, Trimethylamino-ethylpiperazin, N,N-Dimethylcyclo-hexylamin, N,N-Dimethylbenzylamin, N-Methyl-morpholin, N-Ethylmorpholin, Trimethylamin, Triethylamin, Tributylamin, Triethylenediamin, Bis(dimethylamino-alkyl)piperazine, N,N,N',N'-tetramethylethylen-diamin, N,N-Diethylbenzylamin, Bis(N,N-diethylaminoethyl)adipat, N,N,N',N'-Tetramethyl-1,3-butanediamin, N,N-Diethyl-[beta]-phenylethylamin, 1,2-Dimethyl-imidazol, 2-Methylimidazol usw.

Bevorzugt ist das Gewichtverhältnis des Polyisocyanats zu Polyol 170 zu 70, vorzugsweise 130 zu 80 bezogen auf 100 Gew.-Teile des Polyols.

Bevorzugt ist das Gewichtverhältnis des Katalysators 0,1 bis 4 Gew.-Teile, besonders bevorzugt 1 bis 2 Gew.-Teile bezogen auf 100 Gew.-Teile des Polyols.

Bevorzugte Blähmittel für Polyurethane sind Wasser, Kohlenwasserstoffe, Fluorchlorkohlenwasserstoff, Fluorokohlenwasserstoff etc. Die Menge des Blähmittels für Polyurethane ist 0,1 bis 1,8 Gew.-Teile, vorzugsweise 0,3 bis 1,6 Gew.-Teile und insbesondere 0,8 bis 1,6 Gew.-Teile bezogen auf 100 Gew.-Teile des Polyols.

Die Erfindung wird durch die nachstenden Beispiele erläutert.

Herstellung, Verarbeitung und Prüfung von flammgeschützten Polymerformmassen und flammgeschützten Polymerformkörpern

Die Flammschutzkomponenten werden mit dem Polymergranulat und evtl. Additiven vermischt und auf einem Doppelschnecken-Extruder (Typ Leistritz LSM^{®} 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0: kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende
V-1: kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0
V-2: Zündung der Watte durch brennendes Abtropfen, übrige Kriterien wie bei V-1 Nicht klassifizierbar (nkl): erfüllt nicht die Brandklasse V-2.

Bei einigen untersuchten Proben wurde außerdem der LOI-Wert gemessen. Der LOI-Wert (Limiting Oxygen Index) wird nach ISO 4589 bestimmt. Nach ISO 4589 entspricht der LOI der geringsten Sauerstoffkonzentration in Volumenprozent, die in einer Mischung von Sauerstoff und Stickstoff gerade noch die Verbrennung des Kunststoffs unterhält. Je höher der LOI-Wert, desto schwerer entflammbar ist das geprüfte Material.

| | | |
|---|---|---|
| LOI | 23 | brennbar |
| LOI | 24-28 | bedingt brennbar |
| LOI | 29-35 | flammwidrig |
| LOI | >36 | besonders flammwidrig |

### Beispiel 1

Bei Raumtemperatur werden in einem Dreihalskolben mit Rührer und Intensivkühler 188 g Wasser vorgelegt und unter Rühren und Durchleiten von Stickstoff entgast. Dann werden unter Stickstoff 0,2 mg Palladium(II)sulfat und 2,3 mg Tris(3-sulfophenyl)-phosphin Trinatriumsalz hinzugegeben und gerührt, dann 66 g Phosphinsäure in 66 g Wasser zugegeben. Die Reaktionslösung wird in einen 2 I-Büchi-Reaktor überführt und unter Rühren und unter Druck mit Ethylen beschickt und das Reaktionsgemisch auf 80 °C geheizt. Nach einer Ethylenaufnahme von 28 g wird auf Raumtemperatur abgekühlt und freies Ethylen abgelassen. Das Reaktionsgemisch wird am Rotationsverdampfer vom Lösungsmittel befreit. Der Rückstand wird mit 100 g VE-Wasser versetzt und bei Raumtemperatur gerührt. Der entstandene Rückstand wird filtriert und das Filtrat mit Toluol extrahiert, danach wird am Rotationsverdampfer vom Lösungsmittel befreit, und die erhaltene Ethylphosphonigsäure aufgefangen.

### Beispiel 2

Wie in Beispiel 1 werden 66 g Phosphinsäure, 188 g Butanol, 28 g Ethylen, 0,47 mg Tris(dibenzylidenaceton)dipalladium und 0,63 mg 4,5-Bis(diphenylphosphino)-9,9-dimethylxanthen umgesetzt, dann die letzten beiden entfernt und danach nochmal 124 g n-Butanol zugegeben. Bei einer Reaktionstemperatur von 80 - 110 °C wird das gebildete Wasser durch Azeotropdestillation entfernt. Das Produkt (Ethylphosphonigsäure) wird durch Destillation bei 1 mbar gereinigt.

### Beispiel 3

94,1 g Ethylphosphonigsäure (hergestellt wie in Beispiel 1) und 52,0 g Itaconsäure werden in einem Vierhalsrundkolben mit Rührer, Rückflusskühler, Thermometer und Stickstoffeinlass auf 160 °C erhitzt. Nachdem die Reaktion angesprungen ist, rührt man 15 min nach, gibt nochmal 36,4 g Itaconsäure dazu und nach weiteren 30 min nochmal 41,6g Itaconsäure. Flüchtige Bestandteile werden bei vermindertem Druck abdestilliert. Es werden 220 g Addukt aus Ethylphosphonigsäure und Itaconsäure erhalten, das 13,4 % Phosphor enthält. Ein Addukt von Oxa-10-phosphaphenanthren mit Itaconsäure enthielt nur 9 % Phosphor.

### Beispiel 4

94,1 g Ethylphosphonigsäure (hergestellt wie in Beispiel 1) und 116 g Maleinsäure werden in einen Vierhalsrundkolben mit Rührer, Rückflusskühler, Thermometer und Stickstoffeinlass gefüllt. Innerhalb von 1 h werden bei ca 10 °C 16,4 g einer 5 %igen Lösung von AIBN in Eisessig zugetropft. Danach wird das Lösungmittel im Vakuum abdestilliert. Es werden 191 g Addukt aus Ethylphosphonigsäure und Maleinsäure erhalten, das 14,5 % Phosphor enthält. Ein Addukt von Oxa-10-phosphaphenanthren mit Maleinsäure enthielt nur 9,3 % Phosphor.

### Beispiel 5

94,1 g Ethylphosphonigsäure (hergestellt wie in Beispiel 1) und 144 g Fumarsäure-dimethylester werden in einen Vierhalsrundkolben mit Rührer, Rückflusskühler, Thermometer und Stickstoffeinlass gefüllt, auf 150 °C erhitzt und dann 2 h nachgerührt. Flüchtige Bestandteile werden bei vermindertem Druck abdestilliert. Es werden 226 g Addukt aus Ethylphosphonigsäure und Fumarsäuredimethylester erhalten, das 13,1 % Phosphor enthält. Ein Addukt von Oxa-10-phosphaphenanthren mit Fumarsäuredimethylester nur 8,6 % Phosphor.

### Beispiel 6

150 g Ethylphosphonigsäure-n-Butylester (hergestellt wie in Beispiel 2) und 116 g Fumarsäure werden in 217,4 g Butanol vorgelegt und zum Sieden aufgeheizt. Unter Rühren werden 13,0 g Wako V65B Initiator, die in 130,4 g Butanol gelöst wurden zudosiert. Das Lösungsmittel wird im Vakuum abdestilliert. Es werden 240 g Addukt aus Ethylphosphonigsäure-n-Butylester und Fumarsäure erhalten, das 11,6 % Phosphor enthält.

### Beispiel 7

158 g Itaconsäuredimethylester werden unter Stickstoffatmosphäre auf 150 °C erhitzt und 150 g Ethylphosphonigsäure-n-Butylester (hergestellt wie in Beispiel 2) unter Rühren zudosiert. Flüchtige Bestandteile werden bei vermindertem Druck abdestilliert. Es werden 296 g Addukt aus Ethylphosphonigsäure-n-Butylester und Itaconsäuredimethylester erhalten, das 10,4 % Phosphor enthält.

### Beispiel 8

150 g Ethylphosphonigsäure-n-Butylester (hergestellt wie in Beispiel 2) und 242 g Itaconsäuredibutylester in 217,4 g Butanol werden zum Sieden aufgeheizt. Unter Rühren werden 13 g Wako V65B Initiator, die in 130 g Butanol gelöst waren, zudosiert. Das Lösungsmittel wird im Vakuum abdestilliert. Es werden 377 g Addukt aus Ethylphosphonigsäure-n-Butylester und Itaconsäuredibutylester erhalten, das 7,7 % Phosphor enthält.

### Beispiel 9

In einem Fünfhalskolben mit Thermometer, Rückflusskühler, Rührer und Tropftrichter 228 g Maleinsäuredibutylester und 150 g des Ethylphosphonigsäure-n-Butylesters vorgelegt. Unter Rühren werden 5 g Natriumbutylat (30 %) so schnell zugetropft, dass die Temperatur nicht über 60 °C ansteigt und destilliert dann leichtflüchtige Bestandteile im Vakuum ab. Es werden 363 g Addukt aus Ethylphosphonigsäure-n-Butylester und Maleinsäuredibutylester erhalten, das 8,1 % Phosphor enthält.

### Beispiel 10

94,1 g Ethylphosphonigsäure (hergestellt wie in Beispiel 1) und 98,1 g Maleinsäureanhydrid werden in einem Reaktionsgefäß unter Stickstoffatmosphäre auf 150 °C erhitzt und zur Reaktion gebracht. Es werden 183 g Addukt aus Ethylphosphonigsäure und Maleinsäureanhydrid erhalten.

### Beispiel 11

150 g Ethylphosphonigsäure-n-Butylester (hergestellt wie in Beispiel 2) und 112 g Itaconsäureanhydrid werden in einem Reaktionsgefäß unter Stickstoffatmosphäre auf 150 °C erhitzt und zur Reaktion gebracht. Es werden 257 g Addukt aus Ethylphos-phonigsäure-n-Butylester und Itaconsäureanhydrid erhalten, das 11,5 % Phosphor enthält.

### Beispiel 12

150 g Ethylphosphonigsäure-n-Butylester (hergestellt wie in Beispiel 2) und 108 g Benzochinon werden zu 400 g 2-Ethoxyethanol gegeben und unter Rühren auf 70 °C erhitzt, nachgerührt und danach abgekühlt. Das Produkt wird abfiltriert, mit 72 ml 2-Ethoxyethanol und 72 ml Methanol gewaschen und bei 130 °C im Vakuum getrocknet. Es werden 220 g Addukt aus Ethylphosphonigsäure-n-Butylester und Benzochinon erhalten, das 11,9 % Phosphor enthält.

### Beispiel 13

In einem Hochdruckrührbehälter werden 94,1 g Ethylphosphonigsäure (hergestellt wie in Beispiel 1) und 112 g Itaconsäureanhydrid auf 150 °C erhitzt und unter Stickstoffatmosphäre zur Reaktion gebracht. Nach Abkühlen werden 155 g Ethylenglycol und 0,4 g Kaliumtitanyloxalat hinzugegeben und nachgerührt. Durch Evakuieren werden leicht flüchtige Anteile abdestilliert. Es werden 314 g Ethylenglycolester des Adduktes aus Ethylphosphonigsäure und Itaconsäure erhalten, der 10 % Phosphor enthält.

### Beispiel 14

94,1 g Ethylphosphonigsäure (hergestellt wie in Beispiel 1) und 116 g Maleinsäure werden in einen Vierhalsrundkolben mit Rührer, Kühler, Thermometer und Stickstoffeinlass gefüllt. Innerhalb von 1 h werden bei ca. 90 °C 16,4 g einer 5 %igen Lösung von AIBN in Ethylenglycol zugetropft. Dann werden 330 g Ethylenglycol hinzugegeben und auf 200 °C erhitzt. Wasser wird im Gemisch mit Ethylenglycol innerhalb von 4 h abdestilliert. Es werden 248 g Ethylenglycolester des Adduktes aus Ethylphosphonigsäure und Maleinsäure erhalten, der 12,5 % Phosphor enthält.

### Beispiel 15

9,4 g Ethylphosphonigsäure (hergestellt wie in Beispiel 1) und 13 g Itaconsäure werden in einen Vierhalsrundkolben mit Rührer, Kühler, Thermometer und Stickstoffeinlass gefüllt. Die Reaktionslösung wird 1 h auf 160 °C erhitzt. Flüchtige Bestandteile werden bei vermindertem Druck abdestilliert. Es werden 22 g Addukt aus Ethylphosphonigsäure und Itaconsäure erhalten.
Dann werden 290 g Terephthalsäure, 188 g Ethylenglycol, 0,29 g Calciumacetat zugegeben und 2 h auf 200 °C erhitzt. Danach werden 0,29 g Trinatriumphosphatanhydrat und 0,14 g Antimon(III)oxid hinzugegeben, auf 280 °C erhitzt und langsam innerhalb einer Stunde evakuiert. Das Polymerprodukt (420 g) enthält 0,7 % Phosphor, die intrinsische Viskosität ist 0,67, der LOI beträgt 33,4.

### Beispiel 16

94,1 g Ethylphosphonigsäure (hergestellt wie in Beispiel 1) und 13 g Itaconsäure werden in einen Vierhalsrundkolben mit Rührer, Kühler, Thermometer und Stickstoffeinlass gefüllt. Die Reaktionslösung wird auf 160 °C erhitzt und flüchtige Bestandteile bei vermindertem Druck abdestilliert. Es werden 220 g Addukt aus Ethylphosphonigsäure und Itaconsäure erhalten und in einen Dreihalskolben überführt. Es werden 124 g Ethylenglycol zugegeben und bei 160 °C das bei der Veresterung gebildete Wasser abgezogen. Zu einem Zehntel des so erhaltenen Reaktionsproduktes werden 290 g Terephthalsäure, 176 g Ethylenglycol, 0,29 g Calciumacetat zugegeben und 2 h auf 200 °C erhitzt. Dann werden 0,29 g Trinatriumphosphatanhydrat und 0,14 g Antimon(III)oxid hinzugegeben, auf 280 °C erhitzt und dann langsam innerhalb einer Stunde evakuiert. Das Polymerprodukt (ca. 420 g) enthält 0,7 % Phosphor, die intrinsische Viskosität ist 0,68, der LOI beträgt 32,1, der von unbehandeltem Polyethylenterephthalat ca. 25.

### Beispiel 17

9,41 g Ethylphosphonigsäure (hergestellt wie in Beispiel 1) und 11,6 g Maleinsäure werden in einen Vierhalsrundkolben mit Rührer, Kühler, Thermometer und Stickstoffeinlass gefüllt. Die Reaktionslösung wird 1 h auf 160 °C erhitzt und flüchtige Bestandteile bei vermindertem Druck abdestilliert. Es werden ca. 19 g Addukt aus Ethylphosphonigsäure und Maleinsäure erhalten. Dann werden 367 g Dimethylterephthalat, 238 g 1,4-Butandiol, 0,22 g Tetrabutyltitanat und 0,05 g Lithiumacetat zugegeben und die Mischung zunächst 2 h lang unter Rühren auf 130 bis 180 °C erhitzt, danach bei Unterdruck auf 270 °C. Das Polymerprodukt (503 g) enthält 0,6 % Phosphor, die intrinsische Viskosität ist 0,96, der LOI beträgt 35, der von unbehandeltem Polybutylenterephthalat 23.

### Beispiel 18

9,41 g Ethylphosphonigsäure (hergestellt wie in Beispiel 1) und 11,6 g Maleinsäure werden in einen Vierhalsrundkolben mit Rührer, Kühler, Thermometer und Stickstoffeinlass gefüllt. Die Reaktionslösung wird auf 160 °C erhitzt. Flüchtige Bestandteile werden bei vermindertem Druck abdestilliert. Es werden 19 g Addukt aus Ethylphosphonigsäure und Maleinsäure erhalten und in einen Dreihalskolben überführt. Es werden 15,2 g 1,3-Propylenglycol zugegeben und bei 160 °C das bei der Veresterung gebildete Wasser abgezogen. Dann werden 367 g Dimethylterephthalat, 186 g 1,3-Propandiol, 0,22 g Tetrabutyltitanat und 0,05 g Lithiumacetat zugegeben und die Mischung zunächst 2 h unter Rühren auf 130 bis 180 °C erhitzt, danach bei Unterdruck auf 270°C. Das Polymerprodukt (480 g) enthält 0,6 % Phosphor, die intrinsische Viskosität ist 0,94 der LOI beträgt 37.

### Beispiel 19

In einem Fünfhalskolben mit Thermometer, Rückflusskühler, Rührer und Tropftrichter werden 228 g Maleinsäuredibutylester und 150 g Ethylphosphonigsäure-n-Butylester (hergestellt wie in Beispiel 2) vorgelegt. Unter Rühren werden 5 g Natriumbutylat (30 %) so schnell zugetropft, dass die Temperatur nicht über 60 °C ansteigt. Man lässt 30 min nachreagieren und destilliert leichtflüchtige Bestandteile im Vakuum ab. Dann werden einige Tropfen konzentrierte Salzsäure und 235 g Wasser zugegeben und am Rückfluss erhitzt. Unter Zugabe von weiteren 60 g Wasser wird langsam Butanol abdestilliert und 195 g des Adduktes von Ethylphosphonigsäure und Maleinsäure erhalten.

### Beispiel 20 (Herstellung eines Epoxidharzes)

In einem 250 ml Fünfhalskolben mit Rückflusskühler, Rührer, Thermometer und Stickstoffeinleitung werden 100 g eines Bisphenol-A-bisglycidethers mit einem Epoxidwert von 0,55 mol/100 g (Beckopox EP 140, Fa. Solutia) und 30 g (0,134 mol) mit einem Addukt aus Ethylphosphonigsäure und Itaconsäure (hergestellt wie in Beispiel 3) unter Rühren auf maximal 150 °C erhitzt. Nach 30 min ergibt sich eine klare Schmelze. Nach einer weiteren Stunde Rühren bei 150 °C wird die Schmelze abgekühlt und gemörsert. Man erhält 124,8 g eines flammgeschützten Epoxidharzes in Form eines weißen Pulvers mit einem Phosphorgehalt von 3,2 Gew.-%.

### Beispiel 21 (Herstellung eines UP-Harzes)

In einem 2 I-Kolben mit Rührer, Wasserabscheider, Thermometer, Rückflusskühler und Stickstoffeinleitung werden 29,36 g Phthalsäureanhydrid, 19,6 g Maleinsäureanhydrid, 15,2 g Propylenglycol, 25,3 g Di-2-hydroxyethylester des Adduktes aus Ethylphosphonigsäure und Itaconsäure (hergestellt wie in Beispiel 3), 20 g Xylol und 50 mg Hydrochinon unter Rühren und Durchleiten von Stickstoff auf 100 °C erhitzt. Bei Einsetzen der exothermen Reaktion wird die Heizung entfernt. Nach Abklingen der Reaktion wird weiter bei ca. 190 °C gerührt. Nachdem 14 g Wasser abgeschieden sind, wird das Xylol abdestilliert und 88g eines flammgeschützten UP-Harzes erhalten.

**Verwendete Chemikalien:**

| | | | |
|---|---|---|---|
| ITA | Itaconsäure | MDB | |
| | Maleinsäuredibutylester | | |
| MLA | Maleinsäure | MAH | Maleinsäureanhydrid |
| FDM | Fumarsäuredimethylester | IAH | Itaconsäureanhydrid |
| FMA | Fumarsäure | BCH | Benzochinon |
| IDM | Itaconsäuredimethylester | EG | Ethylenglykol |
| IDB | Itaconsäuredibutylester | EPOS | |
| | Ethylphosphonigsäure | | |

**Tabelle**

| Bsp. | | [g] | DBO | [g] | Esterbildner | [g] | Addukt | Ausbeute [g] | P-Gehalt [%] |
|---|---|---|---|---|---|---|---|---|---|
| 3 | Ethylphosphonigsäure | 94,1 | Itaconsäure | 130 | - | - | Ethylphosphonigsäure-Itaconsäure | 220 | 13,4 |
| 4 | Ethylphosphonigsäure | 94,1 | Maleinsäure | 116 | - | - | Ethylphosphonigsäure-Maleinsäure | 191 | 14,5 |
| 5 | Ethylphosphonigsäure | 94,1 | Fumarsäure-dimethylester | 144 | - | - | Ethylphosphonigsäure-FMDE | 226 | 13,1 |
| 6 | Ethylphosphonigsäuren-Butylester | 150 | Fumarsäure | 116 | - | - | Ethylphosphonigsäure-n-Bu-Fumarsäure | 240 | 11,6 |
| 7 | Ethylphosphonigsäuren-Butylester | 150 | Itaconsäure-dimethylester | 158 | - | - | Ethylphosphonigsäure-n-Bu-Itaconsäuredimethylester | 296 | 10,4 |
| 8 | Ethylphosphonigsäuren-Butylester | 150 | Itaconsäure-dibutylester | 242 | - | - | Ethylphosphonigsäure-n-Bu- Itaconsäuredibutylester | 377 | 7,7 |
| 9 | Ethylphosphonigsäuren-Butylester | 150 | Maleinsäure-dibutylester | 228 | - | - | Ethylphosphonigsäure-n-Bu- Maleinsäuredibutylester | 363 | 8,1 |
| 10 | Ethylphosphonigsäure | 94,1 | Maleinsäure-anhydrid | 98,1 | - | - | Ethylphosphonigsäure-Maleinsäureanhydrid | 183 | 16,5 |
| 11 | Ethylphosphonigsäuren-Butylester | 150 | Itaconsäure-anhydrid | 112 | - | - | Ethylphosphonigsäure-n-Bu- Itaconsäureanhydrid | 257 | 11,5 |
| 12 | Ethylphosphonigsäuren-Butylester | 150 | Benzochinon | 108 | - | - | Ethylphosphonigsäure-n-Bu- Benzochinon | 220 | 11,9 |
| 13 | Ethylphosphonigsäure | 94,1 | Itaconsäure-anhydrid | 112 | Ethylenglykol | 155 | Ethylphosphonigsäure-IAfI-Ethylenglykol -Ester | 314 | 10,0 |
| 14 | Ethylphosphonigsäure | 94,1 | Maleinsäure | 116 | Ethylenglykol | 346 | Ethylphosphonigsäure-Maleinsäure-Ethylenglykol-Ester | 248 | 12,5 |
| 15 | Ethylphosphonigsäure | 9,41 | Itaconsäure | 13 | Ethylenglykol | 188 | nicht anwendbar | 420 | 0,7 |
| 16 | Ethylphosphonigsäure | 94,1 | Itaconsäure | 130 | Ethylenglykol | 300 | nicht anwendbar | 420 | 0,7 |
| 17 | Ethylphosphonigsäure | 9,41 | Maleinsäure | 11,6 | BG | 238 | nicht anwendbar | 503 | 0,6 |
| 18 | Ethylphosphonigsäure | 9,41 | Itaconsäure | 13 | PG | 201 | nicht anwendbar | 480 | 0,6 |
| 19 | Ethylphosphonigsäuren-Butylester | 150 | Maleinsäure-dibutylester | 228 | - | - | Ethylphosphonigsäure-Maleinsäure | 195 | 14,7 |

## Patentansprüche

1. Halogenfreies Verfahren zur Herstellung von Addukten von Alkylphosphonigsäurederivaten der Formel (I)
A-P(=O)(OX)-H (I)
und diesterbildenden Olefinen,
wobei es sich bei A um eine Ethyl-, n-Propyl-, i-Propyl- und/oder n-Butyl-Gruppe handelt und wobei es sich bei X um Wasserstoff, eine Methyl-, Ethyl-, Propyl-Butyl-, Ethylenglycol-, Benzyl-Gruppe, um Lithium, Natrium, Kalium, Magnesium, Calcium, Barium, Aluminium, Blei, Titan, Eisen, Zink oder Ammonium, handelt und es sich bei den diesterbildenden Olefinen um Maleinsäure, Fumarsäure, Itaconsäure, Maleinsäureanhydrid oder Itaconsäureanhydrid handelt, **dadurch gekennzeichnet, dass** man
a) eine Phosphinsäurequelle mit Ethylen, 1-Propylen und/oder, 1-Buten in Gegenwart eines Katalysators A zu einem Alkylphosphonigsäurederivat (I) umsetzt, wobei es sich bei der Phosphinsäurequelle um Phosphinsäure, einem Salz der Phosphinsäure, einem Ester der Phosphinsäure oder um Mischungen davon handelt,
b) so entstandenes Alkylphosphonigsäurederivat der Formel (I) mit den vorgenannten diesterbildenden Olefinen in Gegenwart eines Katalysators B zum Addukt umsetzt, wobei es sich bei dem Katalysator A um Übergangsmetalle, Übergangsmetallverbindungen und/oder Katalysatorsysteme handelt, die sich aus einem Übergangsmetall und/oder einer Übergangsmetallverbindung und mindestens einem Liganden zusammensetzen wobei es sich bei den Übergangsmetallen und/oder Übergangsmetallverbindungen um Rhodium, Nickel, Palladium, Ruthenium und/oder Platin handelt und es sich bei dem Katalysator B um Peroxide bildende Verbindungen, Peroxoverbindungen, Azo-Verbindungen, Alkali-, Erdalkalimetalle, -hydride und/oder -alkoholate handelt.

2. Verfahren nach Anspruch 1, **dadurch gekennzeichnet, dass** es sich bei dem Katalysator B um Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azodiisobutyronitril, 2,2'-Azobis(2-amidinopropan)-dihydrochlorid und/oder 2,2'-Azobis(N,N'-dimethylenisobutyramidin)-dihydrochlorid und/oder um Lithium, Lithiumhydrid, Lithiumaluminiumhydrid, Methyllithium, Butyllithium, t-Butyllithium, Lithiumdiisopropylamid, Natrium, Natriumhydrid, Natriumborhydrid, Natriummethanolat, Natriumethanolat oder Natriumbutylat, Kaliummethanolat, Kaliumethanolat und/oder Kaliumbutylat handelt.

3. Verfahren nach Anspruch 1 oder 2, **dadurch gekennzeichnet, dass** das nach Schritt b) erhaltene Umsetzungsprodukt aus Alkylphosphonigsäurederivaten (I) und diesterbildenden Olefinen (II) in einem Schritt c) mit einem Esterbildner umgesetzt wird, wobei es sich bei den Esterbildnern um Methanol, Ethanol, Propanol, Butanol, Amylalkohol, Octanol, Ethylenglycol, Polyethylenglycol, 1,2-Propandiol, 1,3-Propandiol, Butandiol, Glycerin, Erythrit, Pentaerythrit, Allylalkohol, 3-Buten-1-ol, 3-Hydroxy-1-buten, 3-Buten-2-ol, Methyl-vinyl-carbinol, 2-Methyl-2-Propen-1-ol, Methallylalkohol, 2-Buten-1-ol, Crotylalkohol, 1-Penten-3-ol, trans-2-Penten-1-ol, cis -2-Penten-1-ol, 3-Penten-2-ol, 4-Penten-1-ol, 4-Penten-2-ol, 1-Hexen-3-ol, cis-2-Hexen-1-ol, trans-2-Hexen-1-ol, cis-3-Hexen-1-ol, trans-3-Hexen-1-ol, 4-Hexen-1-ol, 5-hexen-1-ol, 5-Hexen-2-ol, 1-hepten-3-ol, 1-Octen-3-ol, trans-2-Octen-1-ol, Oleylalkohol, Terpenalkohol, Propargylalkohol und/oder 2-Butin-1,4-diol handelt.

4. Verfahren nach einem oder mehreren der Ansprüche 1 bis 3, **dadurch gekennzeichnet, dass** man das nach Schritt b) erhaltene Umsetzungsprodukt aus Alkylphosphonigsäurederivaten (I) und diesterbildenden Olefinen mit einem Katalysator C umsetzt, wobei das Umsetzungsprodukt verseift wird.

5. Verfahren nach Anspruch 4, **dadurch gekennzeichnet, dass** es sich bei dem Katalysator C um Brönsted-Säuren, Brönsted-Basen, Wasser, Mineralsäuren, Sulfonsäuren, Alkalihydroxide und/oder Erdalkalihydroxide handelt.

## Claims

1. A halogen-free process for preparing adducts of alkylphosphonous acid derivatives of formula (I)
A-P(=O)(OX)-H (I)
and diester-forming olefins,
wherein A comprises an ethyl, n-propyl, i-propyl and/or n-butyl group and wherein X comprises hydrogen, a methyl, ethyl, propyl, butyl, ethylene glycol, benzyl group, lithium, sodium, potassium, magnesium, calcium, barium, aluminum, lead, titanium, iron, zinc or ammonium, and wherein the diester-forming olefins comprise maleic acid, fumaric acid, itaconic acid, maleic anhydride or itaconic anhydride, which process comprises
a) reacting a phosphinic acid source with ethylene, 1-propylene and/or 1-butene in the presence of a catalyst A to form an alkylphosphonous acid derivative (I), wherein the phosphinic acid source comprises phosphinic acid, a salt of phosphinic acid, an ester of phosphinic acid or mixtures thereof,
b) reacting the resulting alkylphosphonous acid derivative of the formula (I) with the abovementioned diester-forming olefins in the presence of a catalyst B to form the adduct, wherein the catalyst A comprises transition metals, transition metal compounds and/or catalyst systems composed of a transition metal and/or a transition metal compound and at least one ligand, wherein the transition metals and/or transition metal compounds comprise rhodium, nickel, palladium, ruthenium and/or platinum, and the catalyst B comprises peroxide-forming compounds, peroxo compounds, azo compounds, alkali metals, alkaline earth metals, alkali metal hydrides, alkaline earth metal hydrides and/or alkoxides.

2. The process according to claim 1 wherein the catalyst B comprises hydrogen peroxide, sodium peroxide, lithium peroxide, potassium persulfate, sodium persulfate, ammonium persulfate, sodium peroxodisulfate, potassium peroxoborate, peracetic acid, benzoyl peroxide, di-t-butyl peroxide and/or peroxodisulfuric acid, and/or comprises azobisisobutyronitrile, 2,2'-azobis(2-amidinopropane) dihydrochloride and/or 2,2'-azobis(N,N'-dimethyleneisobutyramidine) dihydrochloride and/or comprises lithium, lithium hydride, lithium aluminohydride, methyllithium, butyllithium, t-butyllithium, lithium diisopropylamide, sodium, sodium hydride, sodium borohydride, sodium methoxide, sodium ethoxide, sodium butoxide, potassium methoxide, potassium ethoxide and/or potassium butoxide.

3. The process according to claim 1 or 2 wherein the reaction product obtained from alkylphosphonous acid derivatives (I) and diester-forming olefins (II) after step b) is reacted with an ester former in a step c), wherein the ester formers comprise methanol, ethanol, propanol, butanol, amyl alcohol, octanol, ethylene glycol, polyethylene glycol, 1,2-propanediol, 1,3-propanediol, butanediol, glycerol, erythritol, pentaerythritol, allyl alcohol, 3-buten-1-ol, 3-hydroxy-1-butene, 3-buten-2-ol, methylvinylcarbinol, 2-methyl-2-propen-1-ol, methallyl alcohol, 2-buten-1-ol, crotyl alcohol, 1-penten-3-ol, trans-2-penten-1-ol, cis-2-penten-1-ol, 3-penten-2-ol, 4-penten-1-ol, 4-penten-2-ol, 1-hexen-3-ol, cis-2-hexen-1-ol, trans-2-hexen-1-ol, cis-3-hexen-1-ol, trans-3-hexen-1-ol, 4-hexen-1-ol, 5-hexen-1-ol, 5-hexen-2-ol, 1-hepten-3-ol, 1-octen-3-ol, trans-2-octen-1-ol, oleyl alcohol, terpene alcohol, propargyl alcohol and/or 2-butyne-1,4-diol.

4. The process according to one or more of claims 1 to 3 wherein the reaction product obtained from alkylphosphonous acid derivatives (I) and diester-forming olefins after step b) is reacted with a catalyst C, the reaction product being saponified.

5. The process according to claim 4 wherein the catalyst C comprises Brönsted acids, Brönsted bases, water, mineral acids, sulfonic acids, alkali metal hydroxides and/or alkaline earth metal hydroxides.

## Revendications

1. Procédé exempt d'halogène pour la préparation de produits d'addition de dérivés de l'acide alkylphosphoneux de formule (I)
A-P(=O)(OX)-H (I)
et d'oléfines formant des diesters, où il s'agit, pour A, d'un groupe éthyle, n-propyle, i-propyle et/ou n-butyle et, pour X, d'hydrogène, d'un groupe méthyle, éthyle, propyle, butyle, éthylèneglycol, benzyle, de lithium, de sodium, de potassium, de magnésium, de calcium, de baryum, d'aluminium, de plomb, de titane, de fer, de zinc ou d'ammonium et, pour les oléfines formant des diesters, de l'acide maléique, de l'acide fumarique, de l'acide itaconique, de l'anhydride de l'acide maléique ou de l'anhydride de l'acide itaconique, **caractérisé en ce que**
a) on transforme une source d'acide phosphinique avec de l'éthylène, du 1-propylène et/ou du 1-butène en présence d'un catalyseur A en un dérivé de l'acide alkylphosphoneux (I), où il s'agit, pour la source d'acide phosphinique, d'acide phosphonique, d'un sel de l'acide phosphinique, d'un ester de l'acide phosphinique ou de mélanges de ceux-ci,
b) on transforme le dérivé de l'acide alkylphosphoneux ainsi formé de formule (I) avec les oléfines formant des diesters susmentionnées en présence d'un catalyseur B en produit d'addition, où il s'agit, pour le catalyseur A, de métaux de transition, de composés de métal de transition et/ou de systèmes catalytiques qui sont constitués par un métal de transition et/ou un composé de métal de transition et au moins un ligand, les métaux de transition et/ou les composés de métal de transition étant le rhodium, le nickel, le palladium, le ruthénium et/ou le platine et, pour le catalyseur B, de composés formant des peroxydes, de composés peroxo, de composés azo, de métaux, d'hydrures et/ou d'alcoolates alcalins, alcalino-terreux.

2. Procédé selon la revendication 1, **caractérisé en ce qu'**il s'agit, pour le catalyseur B, de peroxyde d'hydrogène, de peroxyde de sodium, de peroxyde de lithium, de persulfate de potassium, de persulfate de sodium, de persulfate d'ammonium, de peroxodisulfate de sodium, de peroxoborate de potassium, d'acide peracétique, de peroxyde de benzoyle, de peroxyde de di-t-butyle et/ou d'acide peroxodisulfurique et/ou d'azodiisobutyronitrile, de dichlorhydrate de 2,2'-azobis(2-amidinopropane) et/ou de dichlorhydrate de 2,2'-azobis(N,N'-diméthylène-isobutyramidine) et/ou de lithium, d'hydrure de lithium, d'hydrure de lithium-aluminium, de méthyllithium, de butyllithium, de t-butyllithium, de diisopropylamide de lithium, de sodium, d'hydrure de sodium, de borohydrure de sodium, de méthanolate de sodium, d'éthanolate de sodium ou de butylate de sodium, de méthanolate de potassium, d'éthanolate de potassium et/ou de butylate de potassium.

3. Procédé selon la revendication 1 ou 2, **caractérisé en ce que** le produit de transformation obtenu après l'étape b) à partir de dérivés (I) de l'acide alkylphosphoneux et d'oléfines (II) formant des diesters est transformé dans une étape c) avec un agent de formation d'un ester, ou il s'agit, pour les agents de formation d'un ester, de méthanol, d'éthanol, de propanol, de butanol, d'alcool amylique, d'octanol, d'éthylèneglycol, de polyéthylèneglycol, de 1,2-propanediol, de 1,3-propanediol, de butanediol, de glycérol, d'érythritol, de pentaérythritol, d'alcool allylique, de 3-butén-1-ol, de 3-hydroxy-1-butène, de 3-butén-2-ol, de méthylvinylcarbinol, de 2-méthyl-2-propén-1-ol, d'alcool méthallylique, de 2-butén-1-ol, d'alcool crotonylique, de 1-pentén-3-ol, de trans-2-pentén-1-ol, de cis-2-pentén-1-ol, de 3-pentén-2-ol, de 4-pentén-1-ol, de 4-pentén-2-ol, de 1-hexén-3-ol, de cis-2-hexén-1-ol, de trans-2-hexén-1-ol, de cis-3-hexén-1-ol, de trans-3-hexén-1-ol, de 4-hexén-1-ol, de 5-hexén-1-ol, de 5-hexén-2-ol, de 1-heptén-3-ol, de 1-octén-3-ol, de trans-2-octén-1-ol, d'alcool oléylique, d'alcool terpénique, d'alcool propargylique et/ou 2-butyne-1,4-diol.

4. Procédé selon l'une ou plusieurs des revendications 1 à 3, **caractérisé en ce qu'**on transforme le produit de transformation obtenu après l'étape b) à partir de dérivés (I) de l'acide alkylphosphoneux et d'oléfines formant des diesters avec un catalyseur C, le produit de transformation étant saponifié.

5. Procédé selon la revendication 4, **caractérisé en ce qu'**il s'agit, pour le catalyseur C, d'acides de Brönsted, de bases de Brönsted, d'eau, d'acides minéraux, d'acides sulfoniques, d'hydroxydes de métal alcalin et/ou d'hydroxydes de métal alcalino-terreux.
